# EUROPEAN PATENT SPECIFICATION

(11) **EP 4 392 371 B1**
(45) Date of publication and mention of the grant of the patent: **01.10.2025**
(21) Application number: 22769199.5
(22) Date of filing: 25.08.2022
(51) Int. Cl.: C01B 21/26, B01D 53/56, C01B 21/28, C01B 21/38

(54) **MONO PRESSURE SYSTEM FOR PRODUCING NITRIC ACID AND METHOD OF OPERATING THEREOF**
MONODRUCKSYSTEM ZUR HERSTELLUNG VON SALPETERSÄURE UND VERFAHREN ZUM BETRIEB DAVON
SYSTÈME MONOPRESSION POUR LA PRODUCTION D'ACIDE NITRIQUE ET SON PROCÉDÉ DE FONCTIONNEMENT

(30) Priority: 25.08.2021 EP 21193034; 11.01.2022 EP 22150921
(43) Date of publication of application: 03.07.2024
(73) Proprietor: Yara International ASA, 0277 Oslo (NO)
(72) Inventor: VIGELAND, Bent, 3714 Skien (NO); ØIEN, Halvor, 3943 Porsgrunn (NO); FAUCONNIER, Peter, 1850 Grimbergen (BE); DE SMET, Andre, 4535 JH Terneuzen (NL)
(74) Representative: De Clercq & Partners
(86) International application number: PCT/EP2022/073643
(87) International publication number: WO 2023/025872

(56) References cited:
- EP-A1- 2 969 937
- WO-A2-2013/028668
- DE-A1- 102017 201 180

## Description

### Field

The present disclosure relates to the field of nitric acid production in a mono pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in several stages. The ammonia is first oxidized in an ammonia burner on platinum gauzes (commonly called ammonia converter) or cobalt balls, producing nitric oxide (in this disclosure also called nitrogen monoxide (NO)) and water:

4NH₃(g)+5O₂(g)→4NO(g)+6H₂O(g) (1)

The reaction product from (1), nitric oxide, following cooling, is then oxidized to nitrogen dioxide (NO₂) and further to dinitrogen tetroxide N₂O₄ (g) in an oxidation section:

2NO(g)+O₂(g)→2NO₂(g) (2)

2NO₂(g)→N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOx gases, and finally by heating the tail gas released at the outlet of the absorption tower in which the NOx gases are absorbed.

By absorption in water, nitrogen dioxide and dinitrogen tetroxide are converted to nitric acid and nitric oxide:

3 NO₂(g) + H₂O(I) →2 HNO₃(aq) + NO(g) (4)

3 N₂O₄ (g) + 2 H₂O(I)→4 HNO₃(aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃+ 2 O₂→HNO₃+H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono-pressure (single-pressure) and dual pressure (split-pressure) process.
In a mono-pressure process, the converter and the absorber unit operate at roughly the same working pressure P1. Such mono-pressure process generally includes low-pressure (2 to 6 bara) and high-pressure (from above 6 to 16 bara, in particular 9 to 16 bara) processes.

The drive power for the air compressor typically originates from a tail-gas turbine and a steam turbine or electric motor. Accordingly, the compressor train of mono pressure nitric acid production plant typically comprises an air compressor, a tail-gas turbine, and a steam turbine or electric motor.

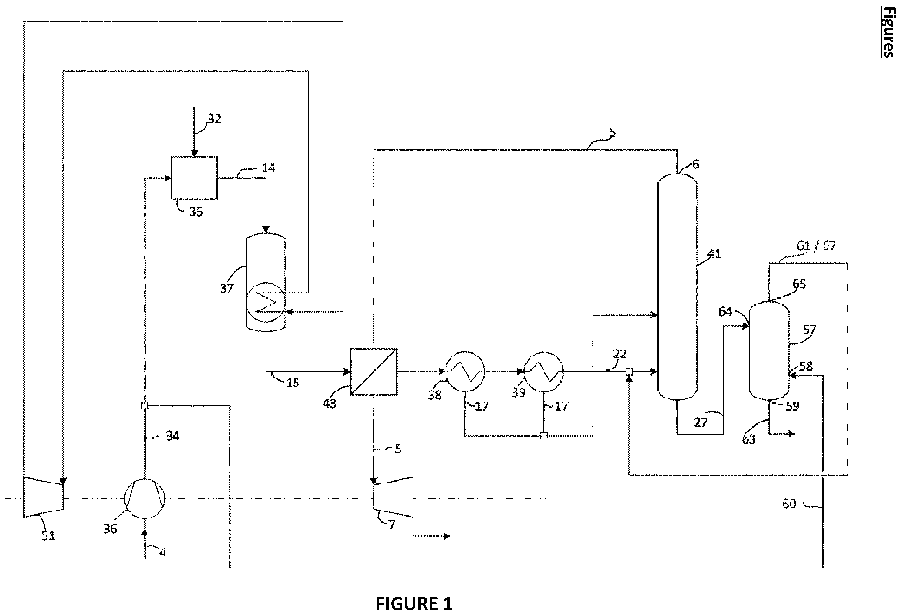

More in detail, referring to Figure 1, a mono pressure plant and process according to the prior art works as follows. Gaseous ammonia **32,** optionally pre-heated in a preheater unit (not shown) is mixed with compressed air **34** pressurised using an air compressor **36,** in a mixing apparatus **35,** and the resulting ammonia/oxygen-enriched air mixture **14** is fed to an ammonia converter **37,** where ammonia is oxidized over a suitable catalyst, thus obtaining a NOₓ gas/steam mixture **15,** comprising water and nitric oxide (NO). Typically, the air compressor has a capacity of at least 300000 m³/h. The heat of the mixture coming out of the ammonia converter is recovered, after which the NOₓ gas/stream mixture is subsequently cooled down in a gas cooler/condenser **38** to a temperature where the water condenses, and an aqueous diluted nitric acid mixture **17** is separated from a gaseous NOₓ stream **22.** The gaseous NOₓ stream is further oxidized to further convert the NO to NO₂ and N₂O₄ to separate out another aqueous diluted nitric acid mixture **17** which is directed to an absorption tower **41,** commonly called absorption tower. On the other end, the gaseous NOₓ stream **22** is sent to the absorber unit **41** too. Inside the absorber unit **41,** the NOₓ gas reacts with water to produce the tail gas **5 and** a stream of raw nitric acid **27** also containing residual NOₓ gas, which is fed to a bleacher **57.** The residual NOₓ gas in the raw nitric acid stream **27** is then stripped out with a gaseous medium **60** such as an oxygen-containing gas or air, inside the bleacher **57;** the bleacher unit is generally operated at about the same pressure as the ammonia converter. The drive power for both the air compressor **36** originates from a tail gas expander **7** and a steam turbine **51** or electric motor (not shown). The tail gas **5** exchanges heat with the NOₓ gas/steam mixture **15** in the tail gas heater **43** and is expanded in the tail gas expander **7.**

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. This revamping has significant drawbacks. First of all, it entails elevated costs for the modification or replacement of the existing equipment, i.e. the air compressor and the corresponding turbines and electrical motor. In addition, the revamping of the equipment is also technically demanding, leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a mono nitric acid plant.

### Background Prior Art

In CN110540178A (China Chengda Engineering Co Ltd, 2019), process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high-pressure and then recycle NOₓ gases to the delivery side of the NOₓ gas compressor.

Therefore, there remains a need for a process and a corresponding plant setup for minimizing or even suppressing the amount of energy required in order to operate the air compressor, in order to avoid bottle-necks in the nitric acid production throughput associated with those compressors.

Further plants and methods for producing nitric acid are known from EP2969937A, DE102017201180A and WO2013028668A.

### Summary

In one aspect of the disclosure a production plant for producing nitric at reduced power consumption and reduced emissions, is disclosed. The production plant comprises, optionally, a source of pressurised air in fluid communication with the production plant comprising:
- a source of an oxygen-rich gas, particularly a source of a pressurized oxygen-rich gas, such as a high-pressure water electrolyzer;
- a mixing apparatus downstream the source of the oxygen-rich gas, for mixing a first oxygen-containing gas with an ammonia gas stream, to produce an ammonia/oxygen-containing gas mixture;
- an ammonia converter operable at a pressure P1, for oxidising ammonia in the ammonia/oxygen-containing gas mixture, to produce a NOₓ gas/steam mixture, comprising water and nitric oxide;
- a means for regulating the concentration of ammonia and/or of oxygen in the ammonia converter, particularly a means for controlling the flow of the oxygen-rich gas and/or a means for controlling the flow of the ammonia gas stream, for maintaining the oxygen to ammonia molar ratio inside the ammonia converter at a ratio of at least 1.2, in particular between 1.2 and 9 or between 1.25 and 9;
- a gas cooler/condenser downstream the ammonia converter, to produce an aqueous diluted nitric acid mixture and a gaseous NOₓ stream;
- an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas;
- a supply for a second oxygen-containing gas, for supplying oxygen to a NOx gas containing stream between the ammonia converter and the absorption tower, for obtaining a tail gas containing at least 0.5% by volume oxygen; and
- a tail gas heater, positioned upstream from the gas cooler/condenser, for heating a tail gas stream with the heat from the NOₓ gas/steam mixture coming from the ammonia converter;
characterised in that the system further comprises:
- a means for splitting a tail gas into a first tail gas stream and a second tail gas stream, wherein the first tail gas stream is in fluid communication with the oxygen-rich gas, and wherein the mixing of the oxygen-rich gas and the first tail gas stream provides the first oxygen-containing gas; and
- a means for pressurising a gas, located anywhere located anywhere in the fluid communication between the absorption tower and the mixing apparatus, or anywhere between the ammonia converter and the absorption tower, to provide the first tail gas stream at a pressure P1.

The inventors have found that, instead of continuously supplying pressurised air provided by an air compressor as primary air to the mixing unit at a pressure P1, it is possible to recirculate the first tail gas stream provided by the means for splitting at a pressure P1, particularly when combined with, at the same time, providing oxygen, particularly pressurized oxygen, to the system. Therefore, compressed or pressurized air only has to be supplied in order to start the process, in particular to pressurize the plant or system, but no longer after the production of the tail gas has started and an air compressor is not required for operating the nitric acid production plant. More in particular, an air compressor suitable for pressurizing the plant or system has a capacity of 2000 to 19000 m³/h, which is much smaller than an air compressor for operating a prior art nitric acid plant, with a capacity of at least 300000 m³/h. In addition, the first oxygen-rich gas having a pressure P1 and the supply of a second oxygen-rich gas provide oxygen to the ammonia converter and to the absorption tower, respectively, such that, in the absence of the primary and secondary air provided by the air compressor, the concentration of oxygen in the ammonia converter and in the absorption tower is similar to that in a standard dual pressure nitric acid plant.

In the absence of an air compressor and with the additional tail gas stream being recirculated in the system, not only is the power demand of the system reduced: the NOₓ emissions leaving the system are also reduced. Therefore, the size of the treatment unit for treating those NOₓ emissions is reduced with respect to the size in the corresponding standard mono pressure nitric acid plant. The system of the present disclosure thus achieves a significant power reduction together with a reduction of the area footprint of the plant and the simplification of the system, by the removal of the air compressor and reducing the size of the tail gas expander. In addition, the separate supply of the pressurized oxygen or oxygen-rich gas ensures an optimal conversion of ammonia to nitric oxide.

In one embodiment according to the production plant of the disclosure, the system further comprises one or more of:
- a heat exchanger, for exchanging heat between the tail gas and the stream of tail gas exiting the tail gas heater, wherein the means for splitting is positioned downstream the heat exchanger, and wherein the means for pressurising is located upstream the heat exchanger;
- a De-NOₓ treatment unit; and
- a steam turbine, wherein the steam turbine can at least partly power the means for pressurising.

In one embodiment according to the production plant of the disclosure, the production plant further comprises a bleacher comprising an inlet for an oxygen-rich bleaching gas, and an outlet for bleaching gases or off-gases, and wherein the bleaching gases or off-gases are in fluid communication with any stream between the ammonia converter and the absorption tower, such that the second oxygen-containing gas is at least partly provided by the bleaching gases or off-gases.

In one embodiment according to the production plant of the disclosure, part of the oxygen-rich gas or part of the oxygen-containing gas or part of the tail gas, is in fluid communication with the inlet of the bleacher, such that the oxygen-rich bleaching gas or stripping gas is at least partly provided by part of the oxygen-rich gas or part of the first oxygen-containing gas or part of the tail gas stream downstream the means for pressurizing.

In one embodiment according to the production plant of the disclosure, the oxygen-rich gas, the second oxygen-containing gas, the oxygen-rich bleaching gas and the oxygen-rich off-gases are all at least partly provided by a high pressure water electrolyser.

In one embodiment according to the production plant of the disclosure, the production plant further comprises a tail gas expander for expanding the second tail gas stream to atmospheric pressure, to produce an expanded tail gas, wherein the means for pressurising can be powered by the tail gas expander or by the steam turbine or by a power source.

In one embodiment according to the production plant of the disclosure, the plant further comprises a source of pressurized air in fluid communication with the system of the present disclosure, wherein the fluid communication between the source of pressurised air and the system is in direct fluid communication with the oxygen-rich gas.

In one aspect of the disclosure, a method for producing nitric acid at reduced power consumption and reduced emissions, in a production plant according to the production plant of the disclosure, is disclosed. The method comprises the steps of:
comprising the steps of:
prior to step c) providing or preparing an oxygen-rich gas and a first oxygen-containing gas, and providing an ammonia gas stream;
   a) particularly, pressurizing the production plant or system of the present disclosure, such as by supplying pressurized air having a pressure P1 in the system of the present disclosure;
   b) particularly, inducing a pressurized air flow in the system by operating a means for pressurizing using external power;
   c) supplying the ammonia gas stream and a first oxygen-containing gas to the mixing apparatus, thereby producing the ammonia/oxygen-containing gas mixture;
   d) oxidising ammonia in the ammonia/oxygen-containing gas mixture in the ammonia converter at a pressure P1, thereby producing a gaseous NOx gas/steam mixture, comprising water and nitric oxide;
   e) separating and condensing steam in the gas cooler/condenser, thereby generating an aqueous diluted nitric acid mixture and a gaseous NOx stream;
   f) absorbing the gaseous NOx stream in the absorption tower, thereby producing the stream of raw nitric acid containing residual NOx gas and the tail gas comprising NOx gases; and
   g) heating the tail gas in the tail gas heater with the gaseous NOₓ gas/steam mixture;
characterised in that the method further comprises the steps of:
   h) pressurizing a gas stream located anywhere downstream the absorption tower, or anywhere between the ammonia converter and the absorption tower, or upstream the ammonia converter in the first oxygen-containing stream or in the ammonia/oxygen-containing gas mixture, to a pressure P1 with the means for pressurising;
   i) splitting the tail gas with the means for splitting into a first tail gas stream and a second tail gas stream; and mixing the first tail gas stream with the oxygen-rich gas, thereby obtaining the first oxygen-containing gas;
   k) adjusting the flow of the oxygen-rich gas being mixed in step i) or the flow of the ammonia gas stream in step c), such as to maintain the oxygen to ammonia molar ratio inside the ammonia converter at a ratio of at least 1.2, particularly between 1.2 and 9 or between 1.25 and 9; and
   o) adjusting the flow of a second oxygen-containing gas, for obtaining a tail gas stream containing at least 0.5% by volume oxygen.

In one embodiment according to the method of the disclosure, in step h), at least part of the tail gas obtained from step f) is pressurised in the means for pressurising, thereby generating a pressurized tail gas, and wherein the method further comprises the steps of:
(h1) heating the pressurized tail gas with a tail gas stream downstream the tail gas heater and to be splitted in step i), in the heat exchanger, thereby bringing the tail gas to be mixed in step i) to a temperature below 300 °C;
m) treating the tail gas in the De-NOₓ treatment unit before step g) and after step h1); and
n) recovering at least part of the steam generated in the ammonia converter in the steam turbine.

In one embodiment according to the method of the disclosure, the method further comprises the step of:
r) bleaching the stream of raw nitric acid containing residual NOₓ gas in a bleacher, thereby producing the bleached nitric acid.

In one embodiment according to the method of the disclosure, the method further comprises the step of:
s) supplying part of the oxygen-rich gas or part of the first oxygen-containing gas obtained in step i) or part of the tail gas obtained in step g), to the inlet of the bleacher in step r).

In one embodiment according to the method of the disclosure, the method further comprises the steps of:
t) operating a water electrolyser, thereby producing oxygen, particularly pressurized oxygen; and
u) providing, from the oxygen produced by the water electrolyser in step t), at least part of the oxygen-rich gas, the second oxygen-containing gas, the oxygen-rich bleaching gas and the oxygen off-gases.

In one embodiment according to the method of the disclosure, the method further comprises the step of:
v) expanding the second tail gas stream in the tail gas expander to atmospheric pressure, thereby producing the expanded tail gas.

In one embodiment according to the method of the disclosure, in step a), the pressurised air is supplied in the stream in direct fluid communication with the oxygen-rich gas.

In one aspect of the disclosure, the use of the production plant of the disclosure for performing the method of the disclosure, is disclosed.

In a further aspect of the disclosure, a method for revamping a production plant for producing nitric acid into a production plant according to the present disclosure is disclosed, wherein the production plant comprises:
- an air compressor for providing compressed air, particularly having a capacity of at least 300000 m³/h;
- a mixing apparatus for mixing compressed air with an ammonia gas stream, to produce an ammonia/oxygen-containing gas mixture;
- an ammonia converter, for oxidising ammonia in the ammonia/oxygen-containing gas mixture, to produce a NOₓ gas/steam mixture comprising water and nitric oxide;
- a gas cooler/condenser downstream the ammonia converter, to produce an aqueous diluted nitric acid mixture and a gaseous NOₓ stream;
- an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas; and
- a tail gas heater, positioned upstream from the gas cooler/condenser, for heating a tail gas stream with the heat from the NOₓ gas/steam mixture coming from the ammonia converter.

The revamping method is characterized in that it comprising the steps of:
- introducing a source of pressurised air in fluid communication with the production plant, for pressurizing the production plant during start-up;
- introducing a supply or source for an oxygen-rich gas, such as a high pressure water electrolyzer, the mixing of the oxygen-rich gas and of compressed air providing part of a first oxygen-containing gas;
- introducing a supply for second oxygen-containing gas, for supplying oxygen between the ammonia converter and the absorption tower, such that a tail gas stream contains at least 0.5% by volume oxygen;
- introducing a means for regulating the concentration of oxygen in the ammonia converter and/or of the ammonia gas stream, particularly a means for controlling the flow of the oxygen-rich gas and/or a means for controlling the flow of the ammonia gas stream, for maintaining the oxygen to ammonia molar ratio inside the ammonia converter at a ratio of at least 1.2;
- introducing a means for splitting a tail gas stream into a first tail gas stream and a second tail gas stream, wherein the first tail gas stream is in fluid communication with the oxygen-rich gas, thereby providing the first oxygen-containing gas;
- introducing a means for pressurising a gas to a pressure P1 located anywhere in the fluid communication between the absorption tower and the mixing apparatus, or between the ammonia converter and the absorption tower, such as to provide the first tail gas stream at a pressure P1; and
- removing the air compressor.

### List of Figures

**Figure 1** schematically shows a nitric acid plant according to the prior art.
**Figure 2A** schematically shows a nitric acid plant according to the disclosure, particularly wherein oxygen is supplied upstream the absorption tower (via 67).
**Figure 2B** schematically shows a nitric acid plant according to the disclosure, particularly comprising a bleacher, wherein the oxygen is fist supplied as the stripper gas in the bleacher, and wherein the oxygen-containing bleacher off gas is supplied upstream the absorption tower.

**Table of numerals**

| | |
|---|---|
| **4** | air |
| **5** | tail gas stream, particularly exiting the absorber |
| **6** | outlet of nitric acid absorption tower |
| **7** | tail gas expander |
| **10** | Tail gas stream |
| **14** | ammonia/oxygen-enriched air mixture |
| **15** | NOₓ gas/steam mixture |
| **17** | aqueous diluted nitric acid mixture |
| **22** | gaseous NOₓ stream |
| **27** | stream of raw nitric acid containing residual NOₓ gas |
| **32** | ammonia |
| **34** | pressurised air |
| **35** | mixing apparatus |
| **36** | air compressor |
| **37** | ammonia converter operable at a pressure P1 |
| **38** | gas cooler/condenser |
| **39** | cooler/separator |
| **41** | absorption tower |
| **43** | tail gas heater |
| **50** | oxygen-rich gas |
| **51** | steam turbine |
| **52** | first tail gas stream |
| **53** | means for pressurising the tail gas stream directed to means for pressurising **53** |
| **55** | means for splitting the tail gas |
| **56** | First oxygen-containing gas |
| **57** | bleacher |
| **58** | bleacher inlet for bleaching gas **60** |
| **59** | bleacher outlet for bleached nitric acid **63** |
| **60** | oxygen-rich gas bleaching gas |
| **61** | bleaching gases or off-gases out of the bleacher **57** from the bleacher outlet **65** |
| **63** | bleached nitric acid |
| **64** | bleacher inlet for raw nitric acid containing residual NOₓ gas **27** |
| **65** | bleacher outlet for bleaching gases **61** |
| **66** | pressurised water electrolyser |
| **67** | Second oxygen-containing gas |
| **70** | expanded tail gas |
| **71** | De-NOₓ treatment unit |
| **73** | heat exchanger |
| **74** | second tail gas stream |
| **76** | tail gas stream partly substituting a source of secondary air |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

As defined herein, a pressurised oxygen-rich gas is a gas having a pressure ranging from 9 to 30 bara, preferably 15 to 30 bara, and comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, an oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen. An oxygen-rich gas can, for example, be provided by an air separation unit or by a water electrolyser.

As defined herein, air is ambient air having atmospheric pressure.

As defined herein, steam are water vapours.

As defined herein, the term "flow" refers to either a volumetric flow or a mass flow.

The present disclosure generally relates to a monopressure system and method for the production of nitric acid with important gains compared to conventional systems and methods, wherein the conventional primary air and/or secondary air consisting of pressurized air, provided by an air compressor with a typical capacity of at least 300000m³/h, is replaced by the combination of (i) oxygen gas or an oxygen-rich gas, in particular a pressurized oxygen gas or oxygen-rich gas, such as produced by a high-pressure water electrolyser as further discussed herein; and (ii) a recirculated tail gas stream, thus removing the need for an air compressor to generate compressed primary and/or secondary air. Stated differently, in the system and methods for the production of nitric acid according to the present disclosure:
(i) oxygen gas or an oxygen-rich gas, in particular a pressurized oxygen gas or oxygen-rich gas, such as produced by a high-pressure water electrolyser, is used (a) upon mixing with part of the tail gas stream, to provide a first oxygen-containing gas stream, which is mixed with an ammonia gas stream and subsequently provided to the ammonia converter, and (b) is used to provide a second oxygen-containing gas stream downstream of the ammonia convertor, such as a second oxygen-containing gas stream which is mixed with a NOx containing gas stream downstream of the ammonia convertor, such as in an oxidation section and/or upstream of the absorber, and/or which is used as a stripping gas in a bleacher, wherein, in particular, the oxygen containing bleacher off-gases are subsequently mixed with a NOx containing gas stream downstream of the ammonia convertor and upstream of the absorber; and
(ii) the tail gas exiting the absorber is split in a first tail gas stream and a second tail gas stream, wherein the first tail gas stream is mixed with the oxygen gas or the oxygen-rich gas, in particular the pressurized oxygen gas or oxygen-rich gas, such as produced by a high-pressure water electrolyser, to provide the first oxygen-containing gas stream; and/or wherein part of the tail gas exiting the absorber may also be mixed with the oxygen gas or oxygen-rich gas, or the first oxygen containing gas, in particular the pressurized oxygen gas or oxygen-rich gas, such as produced by a high-pressure water electrolyser, to provide the second oxygen-containing gas stream.

### Nitric Acid Production Plant

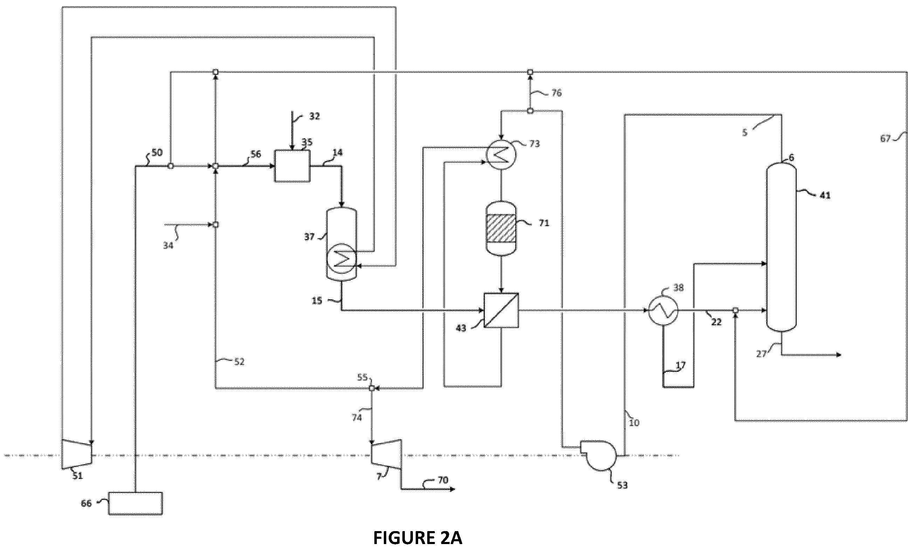

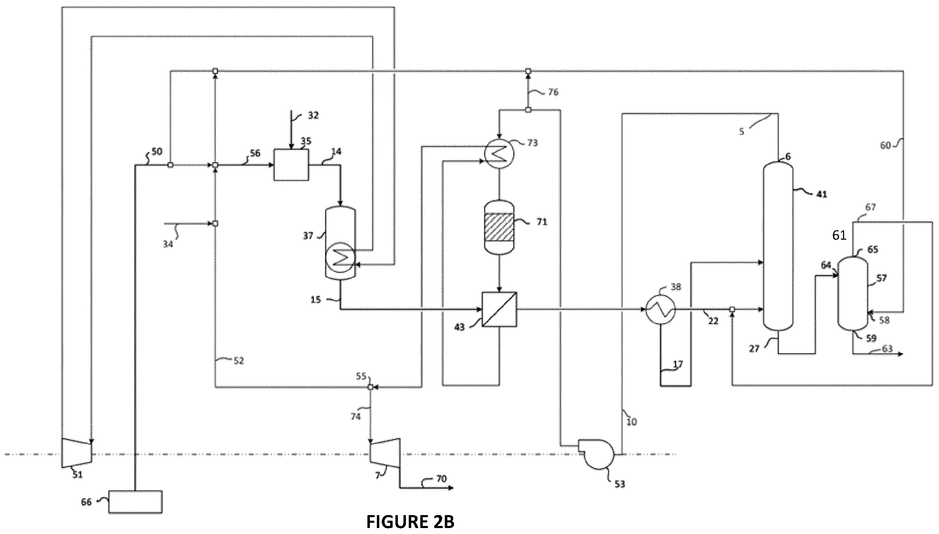

Reference is made to Figures 2A and 2B. In one aspect of the disclosure a production plant for producing nitric at reduced power consumption and reduced emissions, is disclosed. The production plant comprises:
- preferably, a source of pressurised air 34, particularly for pressurizing the production plant or system during start-up, which is in fluid communication with a system comprising a source or supply of an oxygen-rich gas **50.** As defined herein, a source of pressurized air is capable of providing from 2000 to 19000 m³/h of pressurized air;
- a mixing apparatus **35** downstream the source or supply of the first oxygen-rich gas **50,** for mixing a first oxygen-containing gas **56,** particularly having a pressure P1, with an ammonia gas stream **32,** to produce an ammonia/oxygen-containing gas mixture **14;**
- preferably, a means for measuring the oxygen concentration in the first oxygen-containing gas **56;**
- preferably, a means for adjusting the concentration of oxygen in the first oxygen-containing gas **56** such that the oxygen to ammonia molar ratio at the inlet of the ammonia converter **37** is at least 1.2 or 1.25 and, preferably, a means for adjusting the supply of the ammonia gas stream **32** to the mixing apparatus **35.** The system according to the present disclosure may thus comprise a means for regulating (not shown) the concentration of ammonia and/or of oxygen in the ammonia converter **37,** particularly a means for controlling the flow of the oxygen-rich gas **50** and/or a means for controlling the flow of the ammonia gas stream **32,** for maintaining the oxygen to ammonia molar ratio inside the ammonia converter **37** at a ratio of at least 1.20, such as between 1.20 and 9, between 1.25 and 9 or between 1.3 and 9;
- an ammonia converter **37** operable at a pressure P1, wherein pressure P1 is in particular equal to or lower than the pressure of the source of oxygen-rich gas 50, for oxidising ammonia in the ammonia/oxygen-containing gas mixture **14,** to produce a NOₓ gas/steam mixture **15,** comprising water and nitric oxide;
- preferably, means for measuring the temperature in the ammonia converter **37;**
- a gas cooler/condenser **38** downstream the ammonia converter **37,** to produce an aqueous diluted nitric acid mixture **17** and a gaseous NOₓ stream **22;**
- an absorption tower **41,** downstream the gas cooler/condenser **38,** for absorbing the NOₓ gases from the gaseous NOₓ stream **22** in water, to produce a stream of raw nitric acid containing residual NOₓ gas **27** and a tail gas **5** comprising NOₓ gases, said absorption tower comprising an absorption tower tail gas outlet **6** for evacuating the tail gas **5;**
- preferably, a means for measuring the concentration of oxygen in a tail gas stream downstream the absorption tower **41;**
- a source or supply for a second oxygen containing gas or a second oxygen-rich gas **60, 61, 67,** for supplying oxygen between the ammonia converter **37** and the absorption tower **41,** particularly to a NOx gas containing stream between the ammonia converter **37** and the absorption tower **41,** such that the tail gas 5 contains at least 0.5% by volume oxygen; and
- a tail gas heater **43,** positioned upstream from the gas cooler/condenser **38,** for heating a tail gas stream, such as the tail gas **5** coming from the absorption tower **41** to a temperature ranging up to 650 °C with the heat from the NOₓ gas/steam mixture **15** coming from the ammonia converter **37.**

The production plant or system according to the present disclosure is characterised in that the system further comprises:
- a means for splitting **55 a** stream of tail gas (downstream the absorption tower **41)** into a first tail gas stream **52,** which is in fluid communication with the oxygen-rich gas **50,** and a second tail gas stream **74,** particularly wherein the mixing of the oxygen-rich gas **50** and the first tail gas stream **52** provides the first oxygen-containing gas **56;**
- a means for pressurising **53 a** gas to a pressure P1, particularly to provide the first tail gas stream at a pressure P1, located anywhere downstream the absorption tower **41,** such as between the absorption tower **41** and the mixing apparatus **35,** or anywhere between the ammonia converter **37** and the absorption tower **41,** or upstream the ammonia converter **37** in the oxygen-containing stream **56** or in the ammonia/oxygen-containing gas mixture **14;** and
- preferably, a means for adjusting the amount of tail gas being splitted into the first tail gas stream **52** and the second tail gas stream **74.**

As defined herein a tail gas heater is a heat exchange system comprising one or more heat exchanger units. In the case the heat exchanger is made of multiple heat exchanger units, the person skilled in the art will realise that it is possible to split the stream of tail gas downstream the absorption tower **41** inside the tail gas heater **43.**

As defined herein, a stream of tail gas, also referred to as a tail gas stream, is any gas stream downstream the absorption tower, such as located between the absorption tower **41** and the point of communication or mixing between the first tail gas stream **52** and the oxygen-rich gas **50.**

As defined herein, a means for splitting is any means suitable for splitting a tail gas stream, particularly a tail gas stream downstream the absorption tower **41,** such as to generate a first tail gas stream **52,** and a second tail gas stream **74.** In particular, the means for splitting is a T-connection having one inlet and two outlets, such that a gas flowing through the inlet of the T-connection is splitted into two gas streams of identical chemical composition.

As defined herein, a means for pressurising is any suitable means for increasing the pressure of a gas stream. In particular, the means for pressurising is a gas compressor or a gas ejector.

The person skilled in the art will realise that the means for splitting can be incorporated inside the means for pressurising, provided that the means for pressurising includes at least two outlets for the gas stream being pressurised.

As defined herein, a means for adjusting the amount of tail gas stream being splitted into the first tail gas stream **52** and the second tail gas stream **74** are any means for controlling the splitting in the means for splitting 55. In particular, the means for splitting **55** is a T-connection as described above and the means for adjusting is an orifice or a guide 'vane or a flow control valve at one or both of the outlets of the T-connection.

Even more in particular, the means is an integrated process control system, in which the temperature in the ammonia converter **37** is determined through the means for measuring the temperature. The temperature in the ammonia converter **37** is then used for controlling a flow control means in the means for splitting **55,** thereby controlling the splitting of the tail gas **5,** in order for the measured temperature to be maintained in the range of 800-950 °C.

As defined herein, a means for adjusting the oxygen concentration are any suitable means for regulating the amount of oxygen to be introduced in the system from a measurement of the oxygen concentration. The oxygen concentration can be determined, for example, from a measurement in the gas phase using a process gas analyser. The oxygen concentration can also be determined from computing using the concentration of the oxygen source being introduced in the system, in particular the oxygen concentration of the oxygen-rich gas **50,** the flow at which the oxygen source, in particular the oxygen-rich gas, is introduced in the system, preferably the flow at which the ammonia gas stream is introduced in the system, and the relative flow values of the gases with which the oxygen source is mixed, in particular the relative flow values at which the oxygen-rich gas **50** and the ammonia gas stream are mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In this context, as defined herein, a means for regulating the concentration of ammonia and/or of oxygen is any means suitable for achieving a target concentration of ammonia and/or of oxygen. In particular, such means are gas flow control means, in particular a flow control valve or an orifice or a guide vane, for controlling the flow of the oxygen-rich gas **50** and/or of the ammonia gas stream **32.** In particular, the means is an integrated process control system, in which the concentration of oxygen is measured, and the relevant flow of oxygen is thereby determined and achieved from controlling the flow of the first oxygen rich gas, from a gaseous source of oxygen at a pre-determined concentration.

Typically, P1 ranges from 2 to 16 bara. The person skilled in the art will determine the optimal concentration of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** the skilled person will also weigh out the benefits of increasing the oxygen content in the absorption tower **41,** in particular a reduced tower size due to improved absorption, against the drawback of a higher gas volume downstream the absorption tower **41** implying equipment, such as heat exchangers, of a larger size, for heating tail gas.

As defined herein, means for measuring the temperature are any means suitable for measuring and indicating the temperature in the ammonia oxidation burner. In particular, the means for measuring the temperature is a thermocouple or a thermocouple or a thermometer suitable for measuring and indicating a temperature as high as 1000 °C. More in particular, the means for measuring the temperature is an infrared thermometer for measuring and indicating a temperature as high as 1000 °C.

As defined herein, means for converting steam into power are any mean for achieving power from steam. In particular, those means are a steam turbine connected to an electric generator.

Considering that a production cycle of a unit or plant comprises (a) a start-up phase, wherein the different processes are initiated, (b) a continuous and essentially constant phase or operation mode, wherein processes operate at a given working load that is usually kept constant during a production cycle; and (c) a shutdown phase, where processes are slowly and safely stopped, the term "during operation" or "during continuous operation" of a unit or plant, in particular of nitric acid plant, refers to the continuous operation mode wherein the unit or plant produces a product, in particular nitric acid.

The inventors have found that, instead of continuously supplying pressurised air **34** provided by an air compressor **36** to the mixing unit **35** at a pressure P1, in particular during continuous operation of the nitric acid plant, it is possible to recirculate the first tail gas stream **52** at a pressure P1. Therefore, compressed or pressurized air only has to be supplied in order to start the process, i.e. during the start-up phase of the nitric acid plant, in particular to pressurize the system, but no longer after the production of the tail gas has started, during the continuous operation phase or mode, and an air compressor **36** is not required. Due to pressure drop in the gas stream in its trajectory from the ammonia converter **37** to the outlet **6** of the absorption tower **41,** the tail gas **5** has a pressure lower than P1 and, therefore, the means for pressurising **53** provides a pressure P1 to the tail gas stream **10.** In addition, the oxygen-rich gas **50** having a pressure P1 and the supply for an oxygen-rich gas **67** provide oxygen to the ammonia converter **37** and to the absorption tower **41,** respectively, such that, in the absence of the primary and secondary air provided by the air compressor **36,** the concentration of oxygen in the ammonia converter **37** and in the absorption tower **41** is similar to and can be controlled to that in a standard mono pressure nitric acid plant.

In the absence of an air compressor **36** and with the tail gas stream **52** being recirculated in the system, not only is the power demand of the system reduced: the NOₓ emissions leaving the system are also reduced. Therefore, the size of the treatment unit for treating those NOₓ emissions is reduced with respect to the size in the corresponding standard mono pressure nitric acid plant.

In one embodiment according to the production plant of the disclosure, the system further comprises one or more of:
- a heat exchanger **73,** for exchanging heat between the tail gas **5** and the stream of tail gas exiting the heater **43,** wherein the stream of tail gas having exchanged heat with the tail gas **5** is split in the means for splitting **55** downstream the heat exchanger **73** and wherein the means for pressurising **53** are located upstream the heat exchanger **73.** Stated differently, the system comprises a heat exchanger **73,** for exchanging heat between a heated tail gas stream downstream the tail gas heater **43** and a tail gas stream upstream the tail gas heater **43,** wherein the heated tail gas stream downstream the tail gas heater **43** and having exchanged heat with the tail gas stream upstream the tail gas heater **43** is in direct fluid communication with the means for splitting **55;**
- a De-NOₓ treatment unit **71;** and
- a steam turbine **51,** wherein the steam turbine can at least partly power the means for pressurising **53.**

Advantageously, the means for splitting **55** is located downstream the tail gas heater **43.** Indeed, both the first tail gas stream **52** and the second tail gas stream **74** are then at an optimal temperature. In particular, this means that the first stream of tail gas **52** is at a temperature below 300 °C, such that the first tail gas stream **52** can be fed to the ammonia converter **37** without the amount of ammonia fed through the stream **32,** having to be adjusted in order to maintain the temperature ranging from 800 to 950 °C in the ammonia converter **37,** the temperature at which the ammonia converter **37** is operable. In addition, the location of the means for splitting **55** at this location confers to the second tail gas stream **74** an optimal temperature for being expanded in the tail gas expander **7** such as to provide an optimal of energy which can be used to power the means for pressurising **53.** Further, the presence of a steam turbine **51** allows for the recovery of the heat of the steam produced in the ammonia converter **37** and this recovered heat can be used, at least partly, for powering the means for pressurising **53.** Finally, the use of the steam turbine **51** and the location of the means for pressurising upstream the heat exchanger **73** contribute to operating the production plant in an energy-efficient manner. Indeed, less power is required for the means for pressurising **53** to pressurise a stream of tail gas before it is heated by the heat exchanger **73.**

In particular, the tail gas 5 is heated in the heat exchanger **73** from a temperature ranging from 20 to 250 °C, to a temperature ranging from 100 to 450 °C. Subsequently, the tail gas exiting the heat exchanger **73** is heated in the tail gas heater **43** to a temperature ranging from 200 to 550 °C. The tail gas exiting the heat exchanger **73** then is at an optimal temperature for being treated in the De-NOₓ treatment unit **71** and, therefore, the De-NOₓ treatment unit **71 is** located between the heat exchanger **73** and the tail gas heater **43.** The person skilled in the art will, without any difficulty, select the proper location for the De-NOₓ treatment unit **71** such that the operating temperature of the De-NOₓ treatment unit **71** is in agreement with the temperature of the corresponding stream of tail gas.

In one embodiment according to the production plant of the disclosure, the production plant further comprises a bleacher **57** comprising an inlet **58** for an oxygen-rich bleaching gas **60** and an outlet for bleaching gases or off-gases **61.** It is understood that the bleacher further comprises an inlet **64** for the stream of raw nitric acid containing residual NOₓ gas **27** and an outlet **59** for bleached nitric acid **63.** The bleaching gases or off-gases **61** are in fluid communication with any gas stream between the ammonia converter **37** and the absorption tower **41,** such that the supply for or source of an oxygen-rich gas, in particular the second oxygen-containing gas **60, 61, 67** is at least partly provided by the bleaching gases or off-gases **61.**

The person skilled in the art will understand that the pressure of the bleaching gases or off-gases **61** is to be adjusted to about P1 before joining the gaseous NOₓ stream **22.** When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching gases or off-gases **61** is the oxygen-rich gas supplied by the corresponding source **67:** the supply of the oxygen-rich gas **67,** in particular the second oxygen-containing gas, is achieved through the bleacher **57** and no separate source of oxygen is required.

In one embodiment according to the production plant of the disclosure, part of the oxygen-rich gas **50** or part of the first oxygen-containing gas **56** or part of the tail gas **5,** such as part of a tail gas stream **76,** is in fluid communication with the inlet **58** of the bleacher **57,** such that the oxygen-rich bleaching gas or stripping gas **60** is at least partly provided by part of the oxygen-rich gas **50** or part of the first oxygen-containing gas **56** or part of the tail gas **5,** such as part of a tail gas stream **76,** downstream the means for pressurising **53.**

If a bleacher **57** is present, as no secondary air is fed by an air compressor **(36** in the standard nitric acid plant) to the bleacher **57,** the bleacher can be conveniently fed by the oxygen-rich gas **50.** Also, once tail gas **5** is produced and recirculated, part of the oxygen-containing gas **56** or part of the tail gas **5** can be fed to the bleacher **57:** the concentration of NOₓ gases in the oxygen-containing gas **56** or in the tail gas **5** is sufficiently low that the bleaching in the bleacher **57** remains sufficiently efficient. As the means for pressurising **53** is located in a tail gas stream, downstream the absorption tower **41,** it is ensured that the oxygen-rich bleaching gas **60** has a pressure about P1.

In one embodiment according to the production plant of the disclosure, the oxygen-rich gas **50,** the supply for the oxygen-rich gas **67,** in particular the second oxygen-containing gas **60, 61, 67,** the oxygen-rich bleaching gas **60,** and the oxygen-rich off-gases **61** are all provided at least partly by a water electrolyser **66.**

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

2OH-=H₂O+½O₂+2e-;

a cathode, producing hydrogen gas according to the reaction

2H₂O+2e-=H₂ +2OH-;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. The electrolyser may be operated at a temperature of 50 to 80 °C, or 60 to 80 °C, and a gas pressure of 2 bara, preferably, as a high-pressure water electrolyser at a pressure of 9 to 30 bara, even more preferably 15 to 30 bara.

A high-pressure water electrolyser hence results in the production of pressurised hydrogen at the cathode and pressurised oxygen at the anode, such as having a pressure of 9 to 30 bara, even more preferably 15 to 30 bara. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

Conveniently, the water electrolyser **66** provides oxygen to all the various points where oxygen needs to be fed. In particular, the supply of oxygen from the electrolyser **63** is sufficient to provide all of the oxygen of the first oxygen-rich gas **50,** the second oxygen-containing gas **60, 61, 67,** the oxygen-rich bleaching gas **60** and the off-gases **61.** In this manner, the system is simplified and can comprise a single source of oxygen from which oxygen-containing gas streams can be produced. In particular, oxygen-containing streams can be produced at the desired pressure, using standard pressure adjustment means. The use of a high-pressure electrolyser operable at 9 to 30 bara, even more preferably 15 to 30 bara, is particularly useful as a source of oxygen gas to be supplied to a bleacher operating at a pressure higher than P1. In addition, as less energy is required to pressurise water than to pressurise oxygen gas, pressurised oxygen gas is obtained at minimum power consumption.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the greenhouse gas carbon dioxide, CO₂. The hydrogen gas can then be used in the production of ammonia in an Haber-Bosch or also conventionally named synthesis gas unit. The high-pressure water electrolyser then enables the integration of the ammonia and nitric acid production processes.

In one embodiment according to the production plant of the disclosure, the production plant further comprises a tail gas expander **7** for expanding the second tail gas stream **74** to atmospheric pressure, to produce an expanded tail gas **70,** wherein the means for pressurising **53** can be powered at least partly by the tail gas expander **7** or by the steam turbine **51** or by a power source.

In the presence of such tail gas expander **7,** the second tail gas stream **74** can be expanded, thereby providing power that can be used for powering the means for pressurising **53.**

In one embodiment according to the production plant of the disclosure, the fluid communication between the source of pressurised air **34,** for pressurizing the system during the startup phase, and the system is in direct fluid communication with the oxygen-rich gas **50.** It is preferred to introduce pressurised air **34** through a direct fluid communication with the oxygen-rich gas **50.** In this manner, upon operating the means for pressurising during the start-up of the system, it is ensured that air flows through the ammonia converter **37** when ammonia **32** is being fed to ammonia converter **37,** such that there is a sufficient concentration of oxygen to convert ammonia into nitric oxide. Subsequently, the nitric acid process being induced, tail gas **5** and the first tail gas stream **52** can be produced and recirculated to the mixing unit **35,** upon feeding the oxygen-rich gas **50.**

### Method For Producing Nitric Acid

Reference is made to Figures 2A and 2B. In one aspect of the disclosure, a method for producing nitric acid at reduced power consumption and reduced emissions, in a production plant according to the production plant of the disclosure, is disclosed. The method comprises the steps of
a) preferably, pressurizing the system to a pressure of P1, by supplying pressurised air having a pressure **P134** in the system;
b) preferably, inducing a pressurised air flow in the system by operating the means for pressurising **53** using external power;
c) supplying the ammonia gas stream **32** to the mixing apparatus **35,** thereby producing the ammonia/oxygen-containing gas mixture **14;**
d) oxidising ammonia in the ammonia/oxygen-containing gas mixture **14** in the ammonia converter **37** at a pressure equal to or lower than P1, preferably at a pressure P1, and, particularly, at a temperature ranging from 800 to 950 °C, thereby producing the gaseous NOₓ gas/steam mixture **15,** comprising water and nitric oxide;
e) separating and condensing steam in the gas cooler/condenser **38,** thereby generating the aqueous diluted nitric acid mixture **17** and the gaseous NOₓ stream **22;**
f) absorbing the gaseous NOₓ stream **22** in the absorption tower **41,** thereby producing the stream of raw nitric acid **27** containing residual NOₓ gas and the tail gas **5** comprising NOₓ gases; and
g) heating the tail gas **5** in the tail gas heater **43,** particularly to a temperature ranging up to 650 °C with the gaseous NOₓ gas/steam mixture **15;**

The method is characterised in that it further comprises the steps of
h) pressurising a gas stream located anywhere downstream the absorption tower **41,** or anywhere between the ammonia converter **37** and the absorption tower **41,** or upstream the ammonia converter **37** in the first oxygen-containing stream **56** or in the ammonia/oxygen-containing gas mixture **14,** with the means for pressurising **53;**
i) in particular, splitting a tail gas stream with the means for splitting **55** into the first tail gas stream **52** and the second tail gas stream **74;** and mixing the first tail gas stream **52** with the oxygen-rich gas **50,** thereby providing the first oxygen-containing gas **56;**
j) optionally, measuring the oxygen concentration in the first oxygen-containing gas **56;**
k) adjusting the supply or flow of the oxygen-rich gas **50** being mixed in step i) or the supply or flow of the ammonia gas stream **32** in step c), such that the oxygen to ammonia molar ratio at the inlet of the ammonia converter **37** is at least 1.20 or 1.25, or such as to maintain the oxygen to ammonia molar ratio inside the ammonia converter **37** at a ratio of at least 1.2 or 1.25, such as ranging from 1.2 to 9, or 1.25 to 9 or from 1.3 to 9, particularly in case the oxygen concentration measured in step j) is such that the oxygen to ammonia molar ratio at the inlet of the ammonia converter **37** less than 1.2,;
l) optionally, measuring the temperature in the ammonia converter **37;**
m) optionally, adjusting the volume of the first tail gas stream **52** being mixed in step i) or the supply of the ammonia gas stream **32** supplied in step c), if the temperature measured in step l) is outside the range of 800-950 °C, such that the temperature in the ammonia converter is maintained in the range of 800-950 °C;
n) optionally, measuring the oxygen concentration in a tail gas stream downstream the absorption tower **41;**
o) adjusting the supply or flow of the oxygen-rich gas **67,** in particular the flow of the second oxygen-containing gas **60, 61, 67,** in particular between the ammonia converter **37** and the absorption tower **41,** such that the tail gas **5,** in particular a tail gas stream **5, 52, 70, 74, 76,** contains at least 0.5% by volume oxygen, in particular in case the oxygen concentration measured in step n) is less than 0.5% by volume oxygen,;
p) supplying the first oxygen-containing gas **56** to the mixing unit **35;** and
q) in particular, repeating steps c) to p).

Typically, P1 ranges from 2 to 16 bara. The person skilled in the art will determine the optimal percentages of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will establish weigh out the benefits of increasing the oxygen content in the absorption tower **41,** against the drawback of a higher gas volume downstream the absorption tower **41** implying equipment, such as heat exchangers, of a larger size, for heating tail gas.

The inventors have found that, instead of continuously supplying pressurised air **34** provided by an air compressor **36** to the mixing unit **35** at a pressure P1, in particular during continuous operation of the nitric acid plant, it is possible to recirculate the first tail gas stream **52** at a pressure P1. Therefore, compressed or pressurized air only has to be supplied in order to start the process, i.e. during the start-up phase of the nitric acid plant, for pressurizing the system, but no longer after the production of the tail gas has started, during the continuous operation phase or mode, and an air compressor **36** is not required. Due to pressure drop in the gas stream in its trajectory from the ammonia converter **37** to the outlet **6** of the absorption tower **41,** the tail gas **5** has a pressure lower than P1 and, therefore, the means for pressurising **53** provides a pressure P1 to a tail gas stream **10,** and thus to the first tail gas stream **52.** In addition, the oxygen-rich gas **50** having a pressure P1 and the supply for an oxygen-rich gas **67** respectively provide oxygen to the ammonia converter **37** and to the absorption tower **41,** such that, in the absence of the primary and secondary air provided by the air compressor **36,** the concentration of oxygen in the ammonia converter **37** and in the absorption tower **41** is similar to and can be controlled to that in a standard mono pressure nitric acid plant.

In the absence of an air compressor **36** and with the tail gas stream **52** being recirculated in the system, not only is the power demand of the system reduced: the NOₓ emissions leaving the system are also reduced. Therefore, the size of the treatment unit for treating those NOₓ emissions is reduced with respect to the size in the corresponding standard mono pressure nitric acid plant.

In one embodiment according to the method of the disclosure, in step h), at least part of the tail gas obtained from step f) is pressurised in the means for pressurising 53, in particular thereby generating a pressurized tail gas; more in particular wherein step h) is performed before step i), and wherein the method further comprises the steps of
h1) after step f) or g) and before step g) or h), respectively,, heating the tail gas 5 with the tail gas to be mixed in step i), in the heat exchanger **73,** thereby bringing the tail gas to be mixed in step i) to a temperature below 300 °C, in particular heating the pressurized tail gas in the heat exchanger **73** with a tail gas stream downstream the tail gas heater **43** and to be splitted in step i) to a temperature below 300 °C;
r) treating the tail gas **5,** particularly treating the heated tail gas from step h1), in the De-NOₓ treatment unit **71,** in particular before step g) and after step h1); and
s) recovering at least part of the steam generated in the ammonia converter **37** in the steam turbine **51.**

Advantageously, the means for splitting **55** is located downstream the tail gas heater **43.** Indeed, both the first tail gas stream **52** and the second tail gas stream **52** are then at an optimal temperature. This means that the first tail gas stream **52** is at a temperature below 300 °C, such that the first tail gas stream **52** can be fed to the ammonia converter **37** without the amount of ammonia fed through the stream **32,** having to be adjusted in order to maintain the temperature ranging from 800 to 950 °C and at which the ammonia **37** is operable, in the ammonia converter **37.** In addition, the location of the means for splitting **55** at this location confers to the second tail gas stream **74** an optimal temperature for being expanded in the tail gas expander **7** such as to provide an optimal of energy which can be used to power the means for pressurising **53.** Further, the presence of a steam turbine **51** allows for the recovery of the heat of the steam produced in the ammonia converter **37** and this recovered heat can be used, at least partly, for powering the means for pressurising **53.** Finally, the use of the steam turbine **51** and the location of the means for pressurising upstream the heat exchanger **73** contribute to operating the production plant in an energy-efficient manner. Indeed, less power is required for the means for pressurising **53** to pressurise a tail gas stream before it is heated by the heat exchanger **73.**

In particular, the tail gas 5 is heated in the heat exchanger **73** from a temperature ranging from 20 to 250 °C, to a temperature ranging from 100 to 450 °C. Subsequently, the tail gas exiting the heat exchanger **73** is heated in the tail gas heater **43** to a temperature ranging from 200 to 550 °C. The tail gas exiting the heat exchanger **73** then is at an optimal temperature for being treated in the De-NOₓ treatment unit **71** and, therefore, the De-NOₓ treatment unit **71 is** located between the heat exchanger **73** and the tail gas heater **43.** The person skilled in the art will, without any difficulty, select the proper location for the De-NOₓ treatment unit **71** such that the operating temperature of the De-NOₓ treatment unit **71** is in agreement with the temperature of the corresponding tail gas stream.

In one embodiment according to the method of the disclosure, the method further comprises the step of t) bleaching the stream of raw nitric acid **27** containing residual NOₓ gas in the bleacher **57,** thereby producing the bleached nitric acid **63.**

The person skilled in the art will understand that the pressure of the bleaching gases or off-gases **61** is to be adjusted to about P1 before joining the gaseous NOₓ stream **22.** When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching gases or off-gases **61** is the oxygen-rich gas supplied by the corresponding source **67:** the supply of the oxygen-rich gas **67** is achieved through the bleacher **57** and no separate source of oxygen is required. In one embodiment according to the method of the disclosure, the method further comprises the step of u) supplying part of the oxygen-rich gas **50** or part of the first oxygen-containing gas **56** obtained in step i) or part of a tail gas stream obtained in step g), to the inlet **58** of the bleacher **57** in step t).

If such bleaching step t) is performed, as no secondary air is fed by an air compressor **(36** in the standard nitric acid plant) to the bleacher **57,** the bleacher can be conveniently fed by the oxygen-rich gas **50.** Also, once the tail gas **5** is produced and recirculated, the oxygen-containing gas **56** or a tail gas stream can also be fed to the bleacher **57:** the concentration of NOₓ gases in the oxygen-containing gas **56** or the tail gas **5** is sufficiently low that the bleaching in the bleacher **57** remains sufficiently efficient.

In one embodiment according to the method of the disclosure, the method further comprises the steps of
v) operating the water electrolyser **66,** thereby producing oxygen, in particular operating a high-pressure water electrolyzer, thereby producing pressurized oxygen; and
w) providing, from the oxygen produced by the water electrolyser **66** in step v), at least (part of) the oxygen-rich gas **50,** the supply for an oxygen-rich gas **67,** in particular the second oxygen-containing gas **60,61,67,** and the oxygen-rich bleaching gas **60,** and/or the bleaching gases or off-gases **61.**

Conveniently, the water electrolyser **66** provides oxygen to all the various points where oxygen needs to be fed. In particular, the supply of oxygen from the electrolyser **63** is sufficient to provide all of the oxygen of the first oxygen-rich gas **50,** the second oxygen-containing gas **60, 61, 67,** the oxygen-rich bleaching gas **60** and the off-gases **61.** In this manner, the system is simplified and can comprise a single source of oxygen from which oxygen-containing gas streams can be produced. In particular, oxygen-containing streams can be produced at the desired pressure, using standard pressure adjustment means. The use of a high-pressure electrolyser operable at 9 to 30 bara, preferably 15 to 30 bara, is particularly useful as a source of oxygen gas to be supplied to a bleacher operating at a pressure higher than P1.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the greenhouse gas carbon dioxide, CO₂. The hydrogen gas can then be used in the production of ammonia in an Haber-Bosch or also conventionally named synthesis gas unit. The high-pressure water electrolyser then enables the integration of the ammonia and nitric acid production processes.

In one embodiment according to the method of the disclosure, the method further comprises the step of x) expanding the second tail gas stream **74** in the tail gas expander **7** to atmospheric pressure, thereby producing the expanded tail gas **70.**

In the presence of such tail gas expander **7,** the second tail gas stream **74** can be expanded, thereby providing power that can be used for powering the means for pressurising **53.**

In one embodiment according to the method of the disclosure, in step a), the pressurised air **34** is supplied in the stream in direct fluid communication with the oxygen-rich gas **50.**

It is preferred to introduce pressurised air **34** through a direct fluid communication with the oxygen-rich gas **50.** In this manner, upon operating the means for pressurising during the start-up of the system, it is ensured that air flows through the converter **37** when ammonia **32** is being fed to converter **37,** such that there is a sufficient concentration of oxygen to convert ammonia into nitric oxide. Subsequently, the nitric acid process being induced, tail gas **5** and the first tail gas stream **52** can be produced and recirculated to the mixing unit **35,** upon feeding the oxygen-rich gas **50.**

### Use Of the Production Plant Of The Disclosure

In one aspect of the disclosure, the use of the production plant of the disclosure for performing the method of the disclosure, is disclosed.

### Method For Revamping A Nitric Acid Production Plant

In one aspect of the disclosure, a method for revamping a system, i.e. an existing system, for producing nitric acid into a production plant according to the production plant of the disclosure is disclosed, wherein the system, i.e. the existing system for producing nitric acid, comprises:
- an air compressor **36** for providing a compressed air stream **34,** in particular having a pressure P1;
- a mixing apparatus **35,** particularly situated downstream the oxygen-rich gas **50,** for mixing the compressed air with an ammonia gas stream **32,** to produce an ammonia/oxygen-containing gas mixture **14;**
- preferably, means for adjusting the supply of the ammonia gas stream **32** to the mixing apparatus **35;**
- an ammonia converter **37,** particularly operable at a pressure P1 equal to or lower than the pressure of the source of oxygen-rich gas **50,** for oxidising ammonia in the ammonia/oxygen-containing gas mixture **14,** to produce a NOₓ gas/steam mixture **15,** comprising water and nitric oxide;
- preferably, means for measuring the temperature in the ammonia converter **37;**
- a gas cooler/condenser **38** downstream the ammonia converter **37,** to produce an aqueous diluted nitric acid mixture **17** and a gaseous NOₓ stream **22;**
- an absorption tower **41,** downstream the gas cooler/condenser **38,** for absorbing the NOₓ gases from the gaseous NOₓ stream **22** in water, to produce a stream of raw nitric acid **27** containing residual NOₓ gas and a tail gas **5** comprising NOₓ gases, comprising an absorption tower tail gas outlet **6** for evacuating the tail gas **5;**
- preferably, means for measuring the concentration of oxygen in a tail gas stream downstream the absorption tower **41;** and
- a tail gas heater **43,** positioned upstream from the gas cooler/condenser **38,** for heating the tail gas **5** coming from the absorption tower **41** to a temperature up to 650 °C with the heat from the NOₓ gas/steam mixture **15** coming from the ammonia converter **37,** in particular for heating a tail gas stream with the heat from the NOx gas/steam mixture **15** coming from tha ammonia converter **37.**

The revamping method comprises the steps of
- optionally, introducing a source of pressurised air, in particular having a pressure P1 **34** in fluid communication with the system or production plant, for pressurizing the system or production plant during startup, in particular wherein the source of pressurized air is capable of providing from 2000 to 19000 m³/h of pressurized air;
- introducing a source of an oxygen-rich gas **50,** providing part of a first oxygen containing gas, upstream the mixing apparatus **35,** in particular wherein the mixing of the oxygen-rich gas and the compressed air provides at least part of a first oxygen containing gas **56** during start up;
- preferably, introducing means for measuring the oxygen concentration in the first oxygen-containing gas **56;**
- in particular introducing a supply for a second oxygen-containing gas **60,61,67** for supplying oxygen between the ammonia converter **37** and the absorption tower **41,** such that a tail gas stream **5, 52, 70, 74, 76** contains at least 0.5% by volume
- preferably, introducing means for adjusting the concentration of oxygen in the oxygen-containing gas **56** such that the oxygen to ammonia molar ratio at the inlet of the ammonia converter **37** is at least 1.2 or 1.25. More in particular, there may be introduced a means for regulating (not shown) the concentration of ammonia and/or of oxygen in the ammonia converter **37,** particularly a means for controlling the flow of the oxygen-rich gas **50** and/or a means for controlling the flow of the ammonia gas stream **32,** for maintaining the oxygen to ammonia molar ratio inside the ammonia converter **37** at a ratio of at least 1.2 or 1.25, such as between 1.2 and 9, between 1.25 and 9 or between 1.3 and 9;
- introducing a means for splitting **55** a stream of tail gas downstream the absorption tower **41** into a first tail gas stream **52** and a second tail gas stream **74,** wherein the first tail gas stream is in fluid communication with the oxygen-rich gas **50,** in particular thereby providing at least part of the first oxygen-containing gas **56,**
- introducing a means for pressurising **53** a gas to a pressure P1 anywhere downstream the absorption tower **41,** or anywhere between the ammonia converter **37** and the absorption tower **41,** or upstream the ammonia converter **37** in the oxygen-containing stream **56** or in the ammonia/oxygen-containing gas mixture **14,** such as to provide the first tail gas stream at a pressure P1;
- preferably, introducing means for adjusting the amount of tail gas being splitted into the first tail gas stream **52** and the second tail gas stream **74;** and
- removing the air compressor **36.**

The term "oxygen-rich gas" is used as defined elsewhere herein.

As defined herein a tail gas heater is a heat exchange system comprising one or more heat exchanger units. In the case the heat exchanger is made of multiple heat exchanger units, the person skilled in the art will realise that it is possible to split the stream of tail gas downstream the absorption tower **41** inside the tail gas heater **43.**

As defined herein, a stream of tail gas, also referred to as a tail gas stream, is any gas stream downstream the absorption tower, such as located between the absorption tower **41** and the point of communication or mixing between the first tail gas stream **52** and the oxygen-rich gas **50.**

As defined herein, a means for splitting is any means suitable for splitting a tail gas stream, particularly a tail gas stream downstream the absorption tower **41,** such as to generate a first tail gas stream **52,** and a second tail gas stream **74.** In particular, the means for splitting is a T-connection having one inlet and two outlets, such that a gas flowing through the inlet of the T-connection is split into two gas streams of identical chemical composition.

As defined herein, a means for pressurising is any suitable means for increasing the pressure of a gas stream. In particular, the means for pressurising is a gas compressor or a gas ejector.

The person skilled in the art will realise that the means for splitting can be incorporated inside the means for pressurising, provided that the means for pressurising includes at least two outlets for the gas stream being pressurised.

As defined herein, a means for adjusting the amount of tail gas stream being splitted into the first tail gas stream **52** and the second tail gas stream **74** are any means for controlling the splitting in the means for splitting 55. In particular, the means for splitting 55 is a T-connection as described above and the means for adjusting is an orifice or a guide vane or a flow control valve at one or both of the outlets of the T-connection.

Even more in particular, the means is an integrated process control system, in which the temperature in the ammonia converter **37** is determined through the means for measuring the temperature. The temperature in the ammonia converter **37** is then used for controlling a flow control means in the means for splitting 55, thereby controlling the splitting of the tail gas 5, in order for the measured temperature to be maintained in the range of 800-950 °C.

As defined herein, means for adjusting the oxygen concentration are any suitable means for assessing the amount of oxygen to be introduced in the system from a measurement of the oxygen concentration. The oxygen concentration can be determined, for example, from a measurement in the gas phase using a process gas analyser. The oxygen concentration can also be determined from computing using the concentration of the oxygen source being introduced in the system, in particular the oxygen concentration of the oxygen-rich gas **50,** the flow at which the oxygen source, in particular the oxygen-rich gas, is introduced in the system, preferably the flow at which the ammonia gas stream is introduced in the system, and the relative flow values of the gases with which the oxygen source is mixed, in particular the relative flow values at which the oxygen-rich gas **50** and the ammonia gas stream are mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In this context, as defined herein, a means for regulating the concentration of ammonia and/or of oxygen is any means suitable for achieving a target concentration of ammonia and/or of oxygen. In particular, such means are gas flow control means, in particular a flow control valve or an orifice or a guide vane, for controlling the flow of the oxygen-rich gas **50** and/or of the ammonia gas stream **32.** In particular, the means is an integrated process control system, in which the concentration of oxygen is measured, and the relevant flow of oxygen is thereby determined, thus controlling the flow of oxygen, from a gaseous source of oxygen at a pre-determined concentration.

Typically, P1 ranges from 2 to 16 bara. The person skilled in the art will determine the optimal concentration of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** the skilled person will also weigh out the benefits of increasing the oxygen content in the absorption tower 41, in particular a reduced tower size due to improved absorption, against the drawback of a higher gas volume downstream the absorption tower **41** implying equipment, such as heat exchangers, of a larger size, for heating tail gas.

As defined herein, means for measuring the temperature are any means suitable for measuring and indicating the temperature in the ammonia oxidation burner. In particular, the means for measuring the temperature is a thermocouple or a thermocouple or a thermometer suitable for measuring and indicating a temperature as high as 1000 °C. More in particular, the means for measuring the temperature is an infrared thermometer for measuring and indicating a temperature as high as 1000 °C.

### Examples

### 1. Recirculation of tail-gas at 99%

Reference is made to Figure 2. Ammonia **32** was mixed with compressed air **34** in a mixing apparatus **35.** The resulting ammonia/compressed air mixture **14** was fed to an ammonia converter **37,** at a temperature ranging from 800 to 950 °C and operating at a pressure of 8 bara. The oxygen to ammonia molar ratio at the inlet of the ammonia converter **37** was at least 1.25. In the ammonia converter **37,** ammonia was oxidized over a mixed platinum/rhodium catalyst, thus obtaining a NOₓ gas/steam mixture **15,** comprising water and nitric oxide (NO). The heat of the mixture coming out of the ammonia converter was recovered by producing steam for export to a steam grid, for supplying the steam turbine **51,** and also for heating the tail gas **5** as will be described below. The NOₓ gas/stream mixture was subsequently cooled down in heat exchangers (not shown) and in a gas cooler/condenser **38** to a temperature where the water condenses, and an aqueous diluted nitric acid mixture **17** was separated from a gaseous NOₓ stream **22.** The aqueous diluted nitric acid mixture **17** was directed to an absorption tower **41.** The gaseous NOₓ stream **22** was sent to the absorber unit **6** too. Inside the absorber unit **6,** the NOₓ gas reacted with water to produce the tail and a stream of raw nitric acid also containing residual NOₓ gas, which was fed to a bleacher **57.** The oxygen content in the tail gas 5 was maintained at 3% using the bleaching gases **61** of the bleacher **57,** supplied downstream the ammonia converter **37** and upstream the absorption tower **41.** The tail gas stream **5** was pressurised using a gas compressor **53,** thereby producing a pressurised tail gas. The pressurised tail gas was consecutively heated in a heat exchanger **73,** treated in a De-NOx unit **71** and then heated in the tail gas heater **43** to 460 °C, using the heat from the gaseous NOₓ stream **15,** thereby producing a pressurised and heated tail gas. The pressurised and heated tail gas was used for heating the pressurised tail gas in the heat exchanger **73** and splitted over a T-tube **55,** such that 99% of the tail gas stream was splitted, into a first tail gas stream **52** and an additional tail gas stream **74.** The first tail gas stream **52** was mixed with an oxygen-rich gas **50** having a pressure of 9 bara, thereby providing an oxygen-containing gas **56** in the absence of further pressurised air **34** being supplied, such that additional tail gas **5** could be produced in the absence of an air compressor, and pressurised, heated, splitted and recirculated to the ammonia converter **37,** together with the oxygen-rich gas **50.** The amount of the oxygen-rich gas **50** fed to the process was controlled in order to ensure that the oxygen to ammonia molar ratio at the inlet of the ammonia converter **37** was measured and, in case it was lower than 1.25, the amount of the oxygen-rich gas **50** was adjusted, such that the oxygen to ammonia molar ratio at the inlet of the ammonia converter **37** was at least 1.25. The temperature inside the ammonia converter **37** was measured and established to have remained in the range of 800 to 950 °C. The second tail gas stream **74** was sent to the tail gas expander **7.** The residual NOₓ gas in the raw nitric acid stream **27** was then stripped out with a gaseous medium **60** such as an oxygen-containing gas or air, inside the bleacher unit **57;** the bleacher unit was generally operated at about the same pressure as the ammonia converter of 8 bara. The drive power for the gas compressor **53** originated from the tail gas expander **7** and the steam turbine **51.** The net power associated to the compressor **53** was 30 kWh/t 100% HNO₃. This power was provided by the steam turbine **51** and was provided by the tail gas expander **7** or the steam turbine **51** or an electrical motor. The specific steam export amounts to 1300 to 1500 kg / t nitric acid, which compares to a specific steam export of 200 to 600 kg / t nitric acid in a conventional mono pressure nitric acid production plant.

### 2.Recirculation of tail-gas at 76%

Reference is made to Figure 2. Ammonia **32** was mixed with compressed air **34** in a mixing apparatus **35.** The resulting ammonia/compressed air mixture **14** was fed to an ammonia converter **37,** at a temperature ranging from 800 to 950 °C and operating at a pressure of 8 bara. The oxygen to ammonia molar ratio at the inlet of the ammonia converter **37** was at least 1.25. In the ammonia converter **37,** ammonia was oxidized over a mixed platinum/rhodium catalyst, thus obtaining a NOₓ gas/steam mixture **15,** comprising water and nitric oxide (NO). The heat of the mixture coming out of the ammonia converter was recovered by producing steam for export to a steam grid, for supplying the steam turbine **51,** and also for heating the tail gas **5** as will be described below. The NOₓ gas/stream mixture was subsequently cooled down in heat exchangers (not shown) and in a gas cooler/condenser **38** to a temperature where the water condenses, and an aqueous diluted nitric acid mixture **17** was separated from a gaseous NOₓ stream **22.** The aqueous diluted nitric acid mixture **17** was directed to an absorption tower **41.** The gaseous NOₓ stream **22** was sent to the absorber unit **6** too. Inside the absorber unit **6,** the NOₓ gas reacted with water to produce the tail and a stream of raw nitric acid also containing residual NOₓ gas, which was fed to a bleacher **57.** The oxygen content in the tail gas **5** was maintained at 3% using the bleaching gases **61** of the bleacher **57,** supplied downstream the ammonia converter **37** and upstream the absorption tower **41.** The tail gas stream **5** was pressurised using a gas compressor 53, thereby producing a pressurised tail gas. The pressurised tail gas was consecutively heated in a heat exchanger **73,** treated in a De-NOx unit **71** and then heated in the tail gas heater **43** to 460 °C, using the heat from the gaseous NOₓ stream **15,** thereby producing a pressurised and heated tail gas. The pressurised and heated tail gas was used for heating the pressurised tail gas in the heat exchanger **73** and splitted over a T-tube **55,** such that 76% of the tail gas stream was splitted, into a first tail gas stream **52** and an additional (second) tail gas stream **74.** The first tail gas stream **52** was mixed with oxygen-rich gas **50** having a pressure of 9 bara, thereby providing an oxygen-containing gas **56** in the absence of further pressurised air **34** being supplied, such that additional tail gas **5** could be produced in the absence of an air compressor, and pressurised, heated, splitted and recirculated to the ammonia converter **37,** together with an oxygen-rich gas **50.** The amount of the oxygen-rich gas **50** fed to the process was controlled in order to ensure that the oxygen to ammonia molar ratio at the inlet of the ammonia converter **37** was measured and, in case it was lower than 1.25, the amount of the oxygen-rich gas **50** was adjusted, such that the oxygen to ammonia molar ratio at the inlet of the ammonia converter **37** was at least 1.25. The temperature inside the ammonia converter **37** was measured and established to have remained in the range of 800 to 950 °C. The second tail gas stream **74** was sent to the tail gas expander **7.** The residual NOₓ gas in the raw nitric acid stream **27** was then stripped out with a gaseous medium **60** such as an oxygen-containing gas or air, inside the bleacher unit **57;** the bleacher unit was generally operated at about the same pressure as the ammonia converter of 8 bara. The drive power for the gas compressor **53** originated from the tail gas expander **7** and the steam turbine **51.** The net power associated to the compressor **53** was -19.6 kWh/t 100% HNO₃. This power was provided by the steam turbine **51** and was provided by the tail gas expander **7** or the steam turbine **51** or an electrical motor. The specific steam export amounts to 1500 to 1700 kg / t nitric acid, which compares to a specific steam export of 200 to 600 kg / t nitric acid in a conventional mono pressure nitric acid production plant.

## Claims

1. A production plant for producing nitric acid at reduced power consumption and reduced emissions, comprising:
• a source of an oxygen-rich gas, particularly a source of a pressurized oxygen-rich gas, such as a high-pressure water electrolyzer;
• a mixing apparatus downstream the source of the oxygen-rich gas, for mixing a first oxygen-containing gas with an ammonia gas stream, to produce an ammonia/oxygen-containing gas mixture;
• an ammonia converter operable at a pressure P1, for oxidising ammonia in the ammonia/oxygen-containing gas mixture, to produce a NOₓ gas/steam mixture, comprising water and nitric oxide;
• a means for regulating the concentration of ammonia and/or of oxygen in the ammonia converter, particularly a means for controlling the flow of the oxygen-rich gas and/or a means for controlling the flow of the ammonia gas stream, for maintaining the oxygen to ammonia molar ratio inside the ammonia converter at a ratio of at least 1.2;
• a gas cooler/condenser downstream the ammonia converter, to produce an aqueous diluted nitric acid mixture and a gaseous NOₓ stream;
• an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas;
• a supply for a second oxygen-containing gas, for supplying oxygen to a NOx gas containing stream between the ammonia converter and the absorption tower, for obtaining a tail gas containing at least 0.5% by volume oxygen; and
• a tail gas heater, positioned upstream from the gas cooler/condenser, for heating a tail gas stream with the heat from the NOₓ gas/steam mixture coming from the ammonia converter;
**characterised in that** the system further comprises:
• a means for splitting a tail gas into a first tail gas stream and a second tail gas stream, wherein the first tail gas stream is in fluid communication with the oxygen-rich gas, and wherein the mixing of the oxygen-rich gas and the first tail gas stream provides the first oxygen-containing gas; and
• a means for pressurising a gas, located anywhere located anywhere in the fluid communication between the absorption tower and the mixing apparatus, or anywhere between the ammonia converter and the absorption tower, to provide the first tail gas stream at a pressure P1.

2. A production plant for producing nitric acid according to claim 1, comprising, optionally a source of pressurised air for pressurizing the system, particularly during startup, in fluid communication with a system comprising:
• a source of an oxygen-rich gas, particularly a source of a pressurized oxygen-rich gas, such as a high-pressure water electrolyzer;
• a mixing apparatus downstream the source of the oxygen-rich gas, for mixing a first oxygen-containing gas having a pressure P1 with an ammonia gas stream, to produce an ammonia/oxygen-containing gas mixture;
• means for measuring the oxygen concentration in the first oxygen-containing gas;
• means for adjusting the concentration of oxygen in the first oxygen-containing gas such that the oxygen to ammonia molar ratio at the inlet of the ammonia converter is at least 1.2;
• means for adjusting the supply of the ammonia gas stream to the mixing apparatus;
• an ammonia converter operable at a pressure P1, wherein pressure P1 is equal to or lower than the pressure of the source of oxygen-rich gas, for oxidising ammonia in the ammonia/oxygen-containing gas mixture, to produce a NOₓ gas/steam mixture, comprising water and nitric oxide;
• means for measuring the temperature in the ammonia converter;
• a gas cooler/condenser downstream the ammonia converter, to produce an aqueous diluted nitric acid mixture and a gaseous NOₓ stream;
• an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas;
• means for measuring the concentration of oxygen in a tail gas stream downstream the absorption tower;
• a supply for a second oxygen-rich gas, for supplying oxygen between the ammonia converter and the absorption tower, for obtaining a tail gas containing at least 0.5% by volume oxygen; and
• a tail gas heater, positioned upstream from the gas cooler/condenser, for heating the tail gas coming from the absorption tower to a temperature up to 650 °C with the heat from the NOₓ gas/steam mixture coming from the ammonia converter;
**characterised in that** the system further comprises:
• means for pressurising a gas to a pressure P1, located anywhere downstream the absorption tower, or anywhere between the ammonia converter and the absorption tower, or upstream the ammonia converter in the first oxygen-containing stream or in the ammonia/oxygen-containing gas mixture;
• means for splitting a stream of tail gas downstream the absorption tower into a first tail gas stream, in fluid communication with the oxygen-rich gas, and a second tail gas stream; and
• means for adjusting the amount of tail gas being splitted into the first tail gas stream and the second tail gas stream.

3. The production plant according to claim 1 or 2, wherein the system further comprises one or more of:
• a heat exchanger, for exchanging heat between the tail gas and the stream of tail gas exiting the tail gas heater, wherein the means for splitting is positioned downstream the heat exchanger, and wherein the means for pressurising is located upstream the heat exchanger;
• a De-NOₓ treatment unit; and
• a steam turbine, wherein the steam turbine can at least partly power the means for pressurising.

4. The production plant according to any one of claims 1 to 3, further comprising a bleacher comprising an inlet for an oxygen-rich bleaching gas, and an outlet for bleaching gases or off-gases, and wherein the bleaching gases or off-gases are in fluid communication with any stream between the ammonia converter and the absorption tower, such that the second oxygen-containing gas is at least partly provided by the bleaching gases or off-gases.

5. The production plant according to claim 4, wherein part of the oxygen-rich gas or part of the first oxygen-containing gas or part of the tail gas is in fluid communication with the inlet of the bleacher, such that the oxygen-rich bleaching gas is at least partly provided by part of the oxygen-rich gas or part of the first oxygen-containing gas or part of the tail gas stream downstream the means for pressurizing.

6. The production plant according to any one of claims 1 to 5, wherein the oxygen-rich gas, the second oxygen-containing gas, the oxygen-rich bleaching gas and the oxygen-rich off-gases are all at least partly provided by a high pressure water electrolyser.

7. The production plant according to any one of claims 1 to 6, further comprising a tail gas expander for expanding the second tail gas stream to atmospheric pressure, to produce an expanded tail gas, wherein the means for pressurising can at least partly be powered by the tail gas expander or by the steam turbine or by a power source.

8. The production plant according to any one of claims 2 to 7, wherein the fluid communication between the source of pressurised air and the system is in direct fluid communication with the oxygen-rich gas.

9. A method for producing nitric acid at reduced power consumption and reduced emissions, in a production plant according to any one of claims 1 to 8, comprising the steps of:
prior to step c), providing or preparing an oxygen-rich gas and a first oxygen-containing gas, and providing an ammonia gas stream;
c) supplying the ammonia gas stream and the first oxygen-containing gas to the mixing apparatus, thereby producing the ammonia/oxygen-containing gas mixture;
d) oxidising ammonia in the ammonia/oxygen-containing gas mixture in the ammonia converter at a pressure P1, thereby producing a gaseous NOx gas/steam mixture, comprising water and nitric oxide;
e) separating and condensing steam in the gas cooler/condenser, thereby generating an aqueous diluted nitric acid mixture and a gaseous NOx stream;
f) absorbing the gaseous NOx stream in the absorption tower, thereby producing the stream of raw nitric acid containing residual NOx gas and the tail gas comprising NOx gases; and
g) heating the tail gas in the tail gas heater with the gaseous NOₓ gas/steam mixture;
**characterised in that** the method further comprises the steps of:
h) pressurizing a gas stream located anywhere downstream the absorption tower, or anywhere between the ammonia converter and the absorption tower, or upstream the ammonia converter in the first oxygen-containing stream or in the ammonia/oxygen-containing gas mixture, to a pressure P1 with the means for pressurising;
i) splitting the tail gas with the means for splitting into a first tail gas stream and a second tail gas stream; and mixing the first tail gas stream with the oxygen-rich gas, thereby obtaining the first oxygen-containing gas;
k) adjusting the flow of the oxygen-rich gas being mixed in step i) or the flow of the ammonia gas stream in step c, such as to maintain the oxygen to ammonia molar ratio inside the ammonia converter at a ratio of at least 1.2, particularly between 1.2 and 9;
o) adjusting the flow of a second oxygen-containing gas, for obtaining a tail gas stream containing at least 0.5% by volume oxygen.

10. The method for producing nitric acid at reduced power consumption and reduced emissions according to claim 9, comprising the steps of:
a) preferably, pressurizing the system by supplying the pressurised air having a pressure P1 in the system;
b) preferably, inducing a pressurised air flow in the system by operating the means for pressurising using external power;
c) supplying the ammonia gas stream and a first oxygen containing gas to the mixing apparatus, thereby producing the ammonia/oxygen-containing gas mixture;
d) oxidising ammonia in the ammonia/oxygen-containing gas mixture in the ammonia converter, particularly at a pressure equal to or lower than P1 and a temperature ranging from 800 to 950 °C, thereby producing the gaseous NOx gas/steam mixture, comprising water and nitric oxide;
e) separating and condensing steam in the gas cooler/condenser, thereby generating the aqueous diluted nitric acid mixture and the gaseous NOx stream;
f) absorbing the gaseous NOx stream in the absorption tower, thereby producing the stream of raw nitric acid containing residual NOx gas and the tail gas comprising NOx gases; and
g) heating the tail gas in the tail gas heater to a temperature up to 650 °C with the gaseous NOx gas/steam mixture;
wherein the method further comprises the steps of:
h) pressurizing a gas stream located anywhere downstream the absorption tower, or anywhere between the ammonia converter and the absorption tower, or upstream the ammonia converter in the oxygen-containing stream or in the ammonia/oxygen-containing gas mixture, with the means for pressurising;
i) splitting a tail gas stream with a means for splitting into a first tail gas stream and a second tail gas stream, and mixing the first tail gas stream with the oxygen-rich gas, thereby providing the oxygen-containing gas;
j) measuring the oxygen concentration in the oxygen-containing gas;
k) if the oxygen concentration measured in step j) is such that the oxygen to ammonia molar ratio at the inlet of the ammonia converter less than 1.2, particularly between 1.2 and 9, adjusting the supply of the oxygen-rich gas and being mixed in step i) or the supply of the ammonia gas stream in step c), such that the oxygen to ammonia molar ratio at the inlet of the ammonia converter is at least 1.2, particularly between 1.2 and 9;
l) measuring the temperature in the ammonia converter;
m) adjusting the volume of the first tail gas stream being mixed in step i) or the supply of the ammonia gas stream supplied in step c'), if the temperature measured in step l) is outside the range of 800-950 °C, such that the temperature in the ammonia converter is maintained in the range of 800-950 °C;
n) measuring the oxygen concentration in a tail gas stream downstream the absorption tower;
o) if the oxygen concentration measured in step n) is less than 0.5% by volume oxygen, adjusting the supply of the oxygen-rich gas between the ammonia converter and the absorption tower, such that the tail gas contains at least 0.5% by volume oxygen;
p) supplying the oxygen-containing gas to the mixing unit; and
q) repeating steps c) to p).

11. The method according to claim 9 or 10, wherein, in step h), at least part of the tail gas obtained from step f) is pressurised in the means for pressurising, thereby generating a pressurized tail gas, and wherein the method further comprises the steps of:
(h1) heating the pressurized tail gas with a tail gas stream downstream the tail gas heater and to be splitted in step i), in the heat exchanger, thereby bringing the tail gas to be mixed in step i) to a temperature below 300 °C;
r) treating the tail gas in the De-NOₓ treatment unit before step g) and after step h1); and
s) recovering at least part of the steam generated in the ammonia converter in the steam turbine.

12. The method according to any one of claims 9 to 11, further comprising the step of:
t) bleaching the stream of raw nitric acid containing residual NOₓ gas in a bleacher, thereby producing the bleached nitric acid.

13. The method according to claim 12, in particular in a system according to claim 4, further comprising the step of:
u) supplying part of the oxygen-rich gas or part of the first oxygen-containing gas obtained in step i) or part of the tail gas obtained in step g), to the inlet of the bleacher in step t).

14. The method according to any one of claims 9 to 13, further comprising the steps of:
v) operating a water electrolyser, thereby producing oxygen, particularly pressurized oxygen; and
w) providing, from the oxygen produced by the water electrolyser in step v), at least part of the oxygen-rich gas, the second oxygen-containing gas, the oxygen-rich bleaching gas and the oxygen off-gases.

15. The method according to any one of claims 9 to 14, further comprising the step of:
x) expanding the second tail gas stream in the tail gas expander to atmospheric pressure, thereby producing the expanded tail gas.

16. The method according to any of claims 10 to 15, wherein, in step a) the pressurised air is supplied in the stream in direct fluid communication with the oxygen-rich gas.

17. The use of the production plant according to any one of claims 1 to 8 for performing the method according to any one of claims 9 to 16.

18. A method for revamping a production plant for producing nitric acid, wherein the production plant comprises:
• an air compressor for providing compressed air;
• a mixing apparatus for mixing compressed air with an ammonia gas stream, to produce an ammonia/oxygen-containing gas mixture;
• an ammonia converter, for oxidising ammonia in the ammonia/oxygen-containing gas mixture, to produce a NOₓ gas/steam mixture comprising water and nitric oxide;
• a gas cooler/condenser downstream the ammonia converter, to produce an aqueous diluted nitric acid mixture and a gaseous NOₓ stream;
• an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas; and
• a tail gas heater, positioned upstream from the gas cooler/condenser, for heating a tail gas stream with the heat from the NOₓ gas/steam mixture coming from the ammonia converter;
into a production plant according to any one of claims 1 to 8, comprising the steps of:
• introducing a source of pressurised air in fluid communication with the production plant;
• introducing a supply or source for an oxygen-rich gas, such as a high pressure water electrolyzer, the mixing of the oxygen-rich gas and of compressed air providing part of a first oxygen-containing gas;
• introducing a supply for second oxygen-containing gas, for supplying oxygen between the ammonia converter and the absorption tower, such that a tail gas stream contains at least 0.5% by volume oxygen;
• introducing a means for regulating the concentration of oxygen in the ammonia converter and/or of the ammonia gas stream, particularly a means for controlling the flow of the oxygen-rich gas and/or a means for controlling the flow of the ammonia gas stream, for maintaining the oxygen to ammonia molar ratio inside the ammonia converter at a ratio of at least 1.2, particularly between 1.2 and 9;
• introducing a means for splitting a tail gas stream into a first tail gas stream and a second tail gas stream, wherein the first tail gas stream is in fluid communication with the oxygen-rich gas, thereby providing the first oxygen-containing gas;
• introducing a means for pressurising a gas to a pressure P1 located anywhere in the fluid communication between the absorption tower and the mixing apparatus, or between the ammonia converter and the absorption tower, such as to provide the first tail gas stream at a pressure P1; and
• removing the air compressor.

## Patentansprüche

1. Produktionsanlage zur Herstellung von Salpetersäure mit verringertem Stromverbrauch und verringerten Emissionen, umfassend:
• eine Quelle eines sauerstoffreichen Gases, insbesondere eine Quelle eines druckbeaufschlagten sauerstoffreichen Gases, wie z.B. eine Hochdruck-Wasserelektrolysevorrichtung;
• eine Mischvorrichtung stromabwärts der Quelle des sauerstoffreichen Gases zum Mischen eines ersten sauerstoffhaltigen Gases mit einem Ammoniakgasstrom, um ein Ammoniak/sauerstoffhaltiges-Gas-Gemisch zu erzeugen;
• einen Ammoniakkonverter, der bei einem Druck P1 betrieben werden kann, zum Oxidieren von Ammoniak in dem Ammoniak/sauerstoffhaltiges-Gas-Gemisch, um ein NOₓ-Gas/Dampf-Gemisch, das Wasser und Stickoxid umfasst, zu erzeugen;
• ein Mittel zum Regulieren der Konzentration von Ammoniak und/oder Sauerstoff in dem Ammoniakkonverter, insbesondere ein Mittel zum Steuern des Flusses des sauerstoffreichen Gases und/oder ein Mittel zum Steuern des Flusses des Ammoniakgasstroms, um das molare Verhältnis von Sauerstoff zu Ammoniak in dem Ammoniakkonverter bei einem Verhältnis von wenigstens 1,2 zu halten;
• einen Gaskühler/Kondensator stromabwärts des Ammoniakkonverters, um ein wässriges verdünntes Salpetersäuregemisch und einen gasförmigen NOₓ-Strom zu erzeugen;
• einen Absorptionsturm stromabwärts des Gaskühler/Kondensators zum Absorbieren der NOₓ-Gase aus dem gasförmigen NOₓ-Strom in Wasser, um einen Strom von roher Salpetersäure, der restliches NOₓ-Gas enthält, und ein Endgas, das NOₓ-Gase umfasst, zu erzeugen, umfassend einen Absorptionsturm-Endgasauslass zum Ablassen des Endgases;
• eine Zufuhr für ein zweites sauerstoffhaltiges Gas, um Sauerstoff zu einem NOₓ-Gas-enthaltenden Strom zwischen dem Ammoniakkonverter und dem Absorptionsturm zuzuführen, um einen Endgasstrom zu erhalten, der wenigstens 0,5 Vol.-% Sauerstoff enthält; und
• einen Endgaserhitzer, stromaufwärts des Gaskühler/Kondensators angeordnet, zum Erhitzen eines Endgasstroms mit der Wärme aus dem NOₓ-Gas/Dampf-Gemisch, das aus dem Ammoniakkonverter kommt;
**dadurch gekennzeichnet, dass** das System ferner umfasst:
• ein Mittel zum Aufteilen eines Endgases in einen ersten Endgasstrom und einen zweiten Endgasstrom, wobei der erste Endgasstrom in Fluidverbindung mit dem sauerstoffreichen Gas steht und wobei das Mischen des sauerstoffreichen Gases und des ersten Endgasstroms das erste sauerstoffhaltige Gas bereitstellt; und
• ein Mittel zum Druckbeaufschlagen eines Gases, das an beliebiger Stelle in der Fluidverbindung zwischen dem Absorptionsturm und der Mischvorrichtung oder an beliebiger Stelle zwischen dem Ammoniakkonverter und dem Absorptionsturm angeordnet ist, um den ersten Endgasstrom mit einem Druck P1 bereitzustellen.

2. Produktionsanlage zur Herstellung von Salpetersäure nach Anspruch 1, gegebenenfalls umfassend eine Druckluftquelle zum Druckbeaufschlagen des Systems, insbesondere während des Anfahrens, in Fluidverbindung mit einem System umfassend:
• eine Quelle eines sauerstoffreichen Gases, insbesondere eine Quelle eines druckbeaufschlagten sauerstoffreichen Gases, wie z.B. eine Hochdruck-Wasserelektrolysevorrichtung;
• eine Mischvorrichtung stromabwärts der Quelle des sauerstoffreichen Gases zum Mischen eines ersten sauerstoffhaltigen Gases mit einem Druck P1 mit einem Ammoniakgasstrom, um ein Ammoniak/sauerstoffhaltiges-Gas-Gemisch zu erzeugen;
• Mittel zum Messen der Sauerstoffkonzentration in dem ersten sauerstoffhaltigen Gas;
• Mittel zum Einstellen der Sauerstoffkonzentration in dem ersten sauerstoffhaltigen Gas, so dass das molare Verhältnis von Sauerstoff zu Ammoniak an dem Einlass des Ammoniakkonverters wenigstens 1,2 beträgt;
• Mittel zum Einstellen der Zufuhr des Ammoniakgasstroms zu der Mischvorrichtung;
• einen Ammoniakkonverter, der bei einem Druck P1 betrieben werden kann, wobei der Druck P1 gleich dem oder niedriger als der Druck der Quelle des sauerstoffreichen Gases ist, um Ammoniak in dem Ammoniak/sauerstoffhaltiges-Gas-Gemisch zu oxidieren, um ein NOₓ-Gas/Dampf-Gemisch, das Wasser und Stickoxid umfasst, zu erzeugen;
• Mittel zum Messen der Temperatur in dem Ammoniakkonverter;
• einen Gaskühler/Kondensator stromabwärts des Ammoniakkonverters, um ein wässriges verdünntes Salpetersäuregemisch und einen gasförmigen NOₓ-Strom zu erzeugen;
• einen Absorptionsturm stromabwärts des Gaskühler/Kondensators zum Absorbieren der NOₓ-Gase aus dem gasförmigen NOₓ-Strom in Wasser, um einen Strom von roher Salpetersäure, der restliches NOₓ-Gas enthält, und ein Endgas, das NOₓ-Gase umfasst, zu erzeugen, umfassend einen Absorptionsturm-Endgasauslass zum Ablassen des Endgases;
• Mittel zum Messen der Sauerstoffkonzentration in einem Endgasstrom stromabwärts des Absorptionsturms;
• eine Zufuhr für ein zweites sauerstoffhaltiges Gas zum Zuführen von Sauerstoff zwischen dem Ammoniakkonverter und dem Absorptionsturm, um einen Endgasstrom zu erhalten, der wenigstens 0,5 Vol.-% Sauerstoff enthält; und
• einen Endgaserhitzer, der stromaufwärts des Gaskühler/Kondensators angeordnet ist, zum Erhitzen des Endgases, das aus dem Absorptionsturm kommt, auf eine Temperatur bis zu 650 °C mit der Wärme aus dem NOₓ-Gas/Dampf-Gemisch, das aus dem Ammoniakkonverter kommt; **dadurch gekennzeichnet, dass** das System ferner umfasst:
• Mittel zum Druckbeaufschlagen eines Gases auf einen Druck P1, angeordnet an beliebiger Stelle stromabwärts des Absorptionsturms oder an beliebiges Stelle zwischen dem Ammoniakkonverter und dem Absorptionsturm oder stromaufwärts des Ammoniakkonverters in dem ersten sauerstoffhaltigen Strom oder in dem Ammoniak/sauerstoffhaltiges-Gas-Gemisch;
• Mittel zum Aufteilen eines Endgasstroms stromabwärts des Absorptionsturms in einen ersten Endgasstrom in Fluidverbindung mit dem sauerstoffreichen Gas und einen zweiten Endgasstrom; und
• Mittel zum Einstellen der Menge an Endgas, das in den ersten Endgasstrom und den zweiten Endgasstrom aufgeteilt wird.

3. Produktionsanlage nach Anspruch 1 oder 2, wobei das System ferner eines oder mehrere umfasst von:
• einen Wärmetauscher zum Wärmetausch zwischen dem Endgas und dem Strom des aus dem Endgaserhitzer austretenden Endgases, wobei das Mittel zum Aufteilen stromabwärts des Wärmetauschers angeordnet ist und wobei das Mittel zum Druckbeaufschlagen stromaufwärts des Wärmetauschers angeordnet ist;
• eine Ent-NOₓ-behandlungseinheit; und
• eine Dampfturbine, wobei die Dampfturbine das Mittel zum Druckbeaufschlagen wenigstens zum Teil mit Energie versorgen kann.

4. Produktionsanlage nach einem der Ansprüche 1 bis 3, ferner umfassend einen Bleicher, der einen Einlass für ein sauerstoffreiches Bleichgas und einen Auslass für Bleichgase oder Abgase umfasst, und wobei die Bleichgase oder Abgase in Fluidverbindung mit einem beliebigen Strom zwischen dem Ammoniakkonverter und dem Absorptionsturm stehen, so dass das zweite sauerstoffhaltige Gas wenigstens zum Teil von den Bleichgasen oder Abgasen bereitgestellt wird.

5. Produktionsanlage nach Anspruch 4, wobei ein Teil des sauerstoffreichen Gases oder ein Teil des ersten sauerstoffhaltigen Gases oder ein Teil des Endgases in Fluidverbindung mit dem Einlass des Bleichers steht, so dass das sauerstoffreiche Bleichgas wenigstens zum Teil von einem Teil des sauerstoffreichen Gases oder einem Teil des ersten sauerstoffhaltigen Gases oder einem Teil eines Endgasstroms stromabwärts des Mittels zum Druckbeaufschlagen bereitgestellt wird.

6. Produktionsanlage nach einem der Ansprüche 1 bis 5, wobei das sauerstoffreiche Gas, das zweite sauerstoffhaltige Gas, das sauerstoffreiche Bleichgas und die sauerstoffhaltigen Abgase alle wenigstens zum Teil von einer Hochdruck-Wasserelektrolysevorrichtung bereitgestellt werden.

7. Produktionsanlage nach einem der Ansprüche 1 bis 6, ferner umfassend einen Endgasexpander zum Expandieren des zweiten Endgasstroms auf Atmosphärendruck, um ein expandiertes Endgas zu erzeugen, wobei das Mittel zum Druckbeaufschlagen wenigstens zum Teil von dem Endgasexpander oder von der Dampfturbine oder von einer Stromquelle mit Energie versorgt werden kann.

8. Produktionsanlage nach einem der Ansprüche 2 bis 7, wobei die Fluidverbindung zwischen der Druckluftquelle und dem System in direkter Fluidverbindung mit dem sauerstoffreichen Gas steht.

9. Verfahren zur Herstellung von Salpetersäure mit verringertem Stromverbrauch und verringerten Emissionen in einer Produktionsanlage nach einem der Ansprüche 1 bis 8, umfassend die Schritte:
vor Schritt c) Bereitstellen oder Herstellen eines sauerstoffreichen Gases und eines ersten sauerstoffhaltigen Gases und Bereitstellen eines Ammoniakgasstroms;
c) Zuführen des Ammoniakgasstroms und des ersten sauerstoffhaltigen Gases zu der Mischvorrichtung, um das Ammoniak/sauerstoffhaltiges-Gas-Gemisch zu erzeugen;
d) Oxidieren von Ammoniak in dem Ammoniak/sauerstoffhaltiges-Gas-Gemisch in dem Ammoniakkonverter bei einem Druck P1, um ein gasförmiges NOₓ-Gas/Dampf-Gemisch, das Wasser und Stickoxid umfasst, zu erzeugen;
e) Abtrennen und Kondensieren von Dampf in dem Gaskühler/Kondensator, um ein wässriges verdünntes Salpetersäuregemisch und einen gasförmigen NOₓ-Strom zu erzeugen;
f) Absorbieren des gasförmigen NOₓ-Stroms in dem Absorptionsturm, um den Strom von roher Salpetersäure, der restliches NOₓ-Gas enthält, und das Endgas, das NOₓ-Gase umfasst, zu erzeugen; und
g) Erhitzen des Endgases in dem Endgaserhitzer mit dem gasförmigen NOₓ-Gas/Dampf-Gemisch;
**dadurch gekennzeichnet, dass** das Verfahren ferner die Schritte umfasst:
h) Druckbeaufschlagen eines Gasstroms, der an beliegiger Stelle stromabwärts des Absorptionsturms oder an beliebiges Stelle zwischen dem Ammoniakkonverter und dem Absorptionsturm oder stromaufwärts des Ammoniakkonverters in dem ersten sauerstoffhaltigen Strom oder in dem Ammoniak/sauerstoffhaltiges-Gas-Gemisch angeordnet ist, auf einen Druck P1 mit dem Mittel zum Druckbeaufschlagen;
i) Aufteilen eines Endgases mit dem Mittel zum Aufteilen in einen ersten Endgasstrom und einen zweiten Endgasstrom; und Mischen des ersten Endgasstroms mit dem sauerstoffreichen Gas, um das erste sauerstoffhaltige Gas zu erhalten;
k) Einstellen des Flusses des sauerstoffreichen Gases, das bei Schritt i) gemischt wird, oder des Flusses des Ammoniakgasstroms bei Schritt c, um das molare Verhältnis von Sauerstoff zu Ammoniak in dem Ammoniakkonverter bei einem Verhältnis von wenigstens 1,2, insbesondere zwischen 1,2 und 9, zu halten;
o) Einstellen des Flusses eines zweiten sauerstoffhaltigen Gases, um einen Endgasstrom zu erhalten, der wenigstens 0,5 Vol.-% Sauerstoff enthält.

10. Verfahren zur Herstellung von Salpetersäure mit verringertem Stromverbrauch und verringerten Emissionen nach Anspruch 9, umfassend die Schritte:
a) vorzugsweise Druckbeaufschlagen des Systems durch Zuführen der Druckluft mit einem Druck P1 in das System;
b) vorzugsweise Einführen eines Druckluftstroms in das System durch Betreiben des Mittels zum Druckbeaufschlagen unter Verwendung externer Energie;
c) Zuführen des Ammoniakgasstroms und eines ersten sauerstoffhaltigen Gases zu der Mischvorrichtung, um das Ammoniak/sauerstoffhaltiges-Gas-Gemisch zu erzeugen;
d) Oxidieren von Ammoniak in dem Ammoniak/sauerstoffhaltiges-Gas-Gemisch in dem Ammoniakkonverter, insbesondere bei einem Druck von gleich oder niedriger als P1 und einer Temperatur in dem Bereich von 800 bis 950 °C, um das gasförmige NOₓ-Gas/Dampf-Gemisch, das Wasser und Stickoxid umfasst, zu erzeugen;
e) Abtrennen und Kondensieren von Dampf in dem Gaskühler/Kondensator, um das wässrige verdünnte Salpetersäuregemisch und den gasförmigen NOₓ-Strom zu erzeugen;
f) Absorbieren des gasförmigen NOₓ-Stroms in dem Absorptionsturm, um den Strom von roher Salpetersäure, der restliches NOₓ-Gas enthält, und das Endgas, das NOₓ-Gase umfasst, zu erzeugen; und
g) Erhitzen des Endgases im Endgaserhitzer auf eine Temperatur bis zu 650 °C mit dem gasförmigen NOₓ-Gas/Dampf-Gemisch;
wobei das Verfahren ferner die Schritte umfasst:
h) Druckbeaufschlagen eines Gasstroms, der an beliebiger Stelle stromabwärts des Absorptionsturms oder an beliebiges Stelle zwischen dem Ammoniakkonverter und dem Absorptionsturm oder stromaufwärts des Ammoniakkonverters in dem sauerstoffhaltigen Strom oder in dem Ammoniak/sauerstoffhaltiges-Gas-Gemisch angeordnet ist, mit dem Mittel zum Druckbeaufschlagen;
i) Aufteilen eines Endgasstroms mit einem Mittel zum Aufteilen in einen ersten Endgasstrom und einen zweiten Endgasstrom und Mischen des ersten Endgasstroms mit dem sauerstoffreichen Gas, um das sauerstoffhaltige Gas bereitzustellen;
j) Messen der Sauerstoffkonzentration in dem sauerstoffhaltigen Gas;
k) wenn die bei Schritt j) gemessene Sauerstoffkonzentration so ist, dass das molare Verhältnis von Sauerstoff zu Ammoniak an dem Einlass des Ammoniakkonverters kleiner als 1,2 ist, insbesondere zwischen 1,2 und 9 beträgt, Einstellen der Zufuhr des sauerstoffreichen Gases und Mischen bei Schritt i) oder der Zufuhr des Ammoniakgasstroms bei Schritt c), so dass das molare Verhältnis von Sauerstoff zu Ammoniak an dem Einlass des Ammoniakkonverters wenigstens 1,2, insbesondere zwischen 1,2 und 9, beträgt;
l) Messen der Temperatur in dem Ammoniakkonverter;
m) Einstellen des Volumens des bei Schritt i) gemischten ersten Endgasstroms oder des bei Schritt c') zugeführten Ammoniakgasstroms, wenn die bei Schritt l) gemessene Temperatur außerhalb des Bereichs von 800-950 °C liegt, so dass die Temperatur in dem Ammoniakkonverter in dem Bereich von 800-950 °C gehalten wird;
n) Messen der Sauerstoffkonzentration in einem Endgasstrom stromabwärts des Absorptionsturms;
o) wenn die bei Schritt n) gemessene Sauerstoffkonzentration weniger als 0,5 Vol.-% Sauerstoff beträgt, Einstellen der Zufuhr des sauerstoffreichen Gases zwischen dem Ammoniakkonverter und dem Absorptionsturm, so dass das Endgas wenigstens 0,5 Vol.-% Sauerstoff enthält;
p) Zuführen des sauerstoffhaltigen Gases zu der Mischeinheit; und
q) Wiederholen der Schritte c) bis p).

11. Verfahren nach Anspruch 9 oder 10, wobei bei Schritt h) wenigstens ein Teil des bei Schritt f) erhaltenen Endgases in dem Mittel zum Druckbeaufschlagen druckbeaufschlagt wird, um ein druckbeaufschlagtes Endgas zu erzeugen, und wobei das Verfahren ferner die Schritte umfasst:
(h1) Erhitzen des druckbeaufschlagten Endgases mit einem Endgasstrom stromabwärts des Endgaserhitzers und zum Aufteilen bei Schritt i) in dem Wärmetauscher, um das bei Schritt i) zu mischende Endgas auf eine Temperatur von unter 300 °C zu bringen;
r) Behandeln des Endgases in der Ent-NOₓ-behandlungseinheit vor Schritt g) und nach Schritt h1); und
s) Gewinnen wenigstens eines Teils des in dem Ammoniakkonverter erzeugten Dampfs in der Dampfturbine.

12. Verfahren nach einem der Ansprüche 9 bis 11, ferner umfassend den Schritt:
t) Bleichen des Stroms von roher Salpetersäure, der restliches NOₓ-Gas enthält, in dem Bleicher, um die gebleichte Salpetersäure zu erzeugen.

13. Verfahren nach Anspruch 12, insbesondere in einem System nach Anspruch 4, ferner umfassend den Schritt:
u) Zuführen eines Teils des sauerstoffreichen Gases oder eines Teils des bei Schritt i) erhaltenen ersten sauerstoffhaltigen Gases oder eines Teils des bei Schritt g) erhaltenen Endgases zu dem Einlass des Bleichers bei Schritt t).

14. Verfahren nach einem der Ansprüche 9 bis 13, ferner umfassend die Schritte:
v) Betreiben einer Wasserelektrolysevorrichtung, um Sauerstoff, insbesondere druckbeaufschlagten Sauerstoff, zu erzeugen; und
w) Bereitstellen wenigstens eines Teils des sauerstoffreichen Gases, des zweiten sauerstoffhaltigen Gases, des sauerstoffreichen Bleichgases und der Sauerstoff-Abgase aus dem bei Schritt v) von der Wasserelektrolysevorrichtung erzeugten Sauerstoff.

15. Verfahren nach einem der Ansprüche 9 bis 14, ferner umfassend den Schritt:
x) Expandieren des zweiten Endgasstroms in dem Endgasexpander auf Atmosphärendruck, um das expandierte Endgas zu erzeugen.

16. Verfahren nach einem der Ansprüche 10 bis 15, wobei bei Schritt a) die Druckluft in dem Strom in direkter Fluidverbindung mit dem sauerstoffreichen Gas zugeführt wird.

17. Verwendung der Produktionsanlage nach einem der Ansprüche 1 bis 8 zum Durchführen des Verfahrens nach einem der Ansprüche 9 bis 16.

18. Verfahren zum Umbauen einer Produktionsanlage zur Herstellung von Salpetersäure, wobei die Produktionsanlage umfasst:
• einen Luftkompressor zur Bereitstellung von Druckluft;
• eine Mischvorrichtung zum Mischen von Druckluft mit einem Ammoniakgasstrom, um ein Ammoniak/sauerstoffhaltiges-Gas-Gemisch zu erzeugen;
• einen Ammoniakkonverter zum Oxidieren von Ammoniak in dem Ammoniak/sauerstoffhaltiges-Gas-Gemisch, um ein NOₓ-Gas/Dampf-Gemisch, das Wasser und Stickoxid umfasst, zu erzeugen;
• einen Gaskühler/Kondensator stromabwärts des Ammoniakkonverters, um ein wässriges verdünntes Salpetersäuregemisch und einen gasförmigen NOₓ-Strom zu erzeugen;
• einen Absorptionsturm stromabwärts des Gaskühler/Kondensators zum Absorbieren der NOₓ-Gase aus dem komprimierten NOₓ-Gasstrom in Wasser, um einen Strom von roher Salpetersäure, der restliches NOₓ-Gas enthält, und ein Endgas, das NOₓ-Gase umfasst, zu erzeugen, umfassend einen Absorptionsturm-Endgasauslass zum Ablassen des Endgases; und
• einen Endgaserhitzer, stromaufwärts des Gaskühler/Kondensators angeordnet, zum Erhitzen eines Endgasstroms mit der Wärme aus dem NOₓ-Gas/Dampf-Gemisch, das aus dem Ammoniakkonverter kommt;
zu einer Produktionsanlage nach einem der Ansprüche 1 bis 8, umfassend die Schritte:
• Einführen einer Druckluftquelle in Fluidverbindung mit der Produktionsanlage;
• Einführen einer Zufuhr oder Quelle für ein sauerstoffreiches Gas, wie z.B. eine Hochdruck-Wasserelektrolysevorrichtung, wobei Mischen des sauerstoffreichen Gases und von Druckluft einen Teil eines ersten sauerstoffhaltigen Gases bereitstellt;
• Einführen einer Zufuhr für ein zweites sauerstoffhaltiges Gas zum Zuführen von Sauerstoff zwischen dem Ammoniakkonverter und dem Absorptionsturm, so dass ein Endgasstrom wenigstens 0,5 Vol.-% Sauerstoff enthält;
• Einführen eines Mittels zum Regulieren der Konzentration von Sauerstoff in dem Ammoniakkonverter und/oder dem Ammoniakgasstrom, insbesondere ein Mittel zum Steuern des Flusses des sauerstoffreichen Gases und/oder ein Mittel zum Steuern des Flusses des Ammoniakgasstroms, um das molare Verhältnis von Sauerstoff zu Ammoniak in dem Ammoniakkonverter bei einem Verhältnis von wenigstens 1,2, insbesondere zwischen 1,2 und 9, zu halten;
• Einführen eines Mittels zum Aufteilen eines Endgasstroms in einen ersten Endgasstrom und einen zweiten Endgasstrom, wobei der erste Endgasstrom in Fluidverbindung mit dem sauerstoffreichen Gas steht, um das erste sauerstoffhaltige Gas bereitzustellen;
• Einführen eines Mittels zum Druckbeaufschlagen eines Gases auf einen Druck P1, angeordnet an beliebiger Stelle in der Fluidverbindung zwischen dem Absorptionsturm und der Mischvorrichtung oder zwischen dem Ammoniakkonverter und dem Absorptionsturm, um den ersten Endgasstrom bei einem Druck P1 bereitzustellen; und
• Entfernen des Luftkompressors.

## Revendications

1. Installation de production pour produire de l'acide nitrique avec une consommation d'énergie réduite et des émissions réduites, comprenant :
• une source de gaz riche en oxygène, en particulier une source de gaz riche en oxygène sous pression, telle qu'un électrolyseur d'eau à haute pression ;
• un appareil de mélange en aval de la source du gaz riche en oxygène, pour mélanger un premier gaz contenant de l'oxygène avec un flux d'ammoniac gazeux, afin de produire un mélange ammoniac/gaz contenant de l'oxygène ;
• un convertisseur d'ammoniac pouvant fonctionner à une pression P1, pour oxyder l'ammoniac présent dans le mélange ammoniac/gaz contenant de l'oxygène, afin de produire un mélange NOₓ gazeux/vapeur d'eau comprenant de l'eau et de l'oxyde nitrique ;
• un moyen pour réguler la concentration d'ammoniac et/ou d'oxygène dans le convertisseur d'ammoniac, en particulier un moyen pour régler le débit du gaz riche en oxygène et/ou un moyen pour régler le débit du flux d'ammoniac gazeux, pour maintenir le rapport molaire de l'oxygène à l'ammoniac à l'intérieur du convertisseur d'ammoniac à un rapport d'au moins 1,2 ;
• un refroidisseur/condenseur de gaz en aval du convertisseur d'ammoniac, afin de produire un mélange aqueux d'acide nitrique dilué et un flux de NOₓ gazeux ;
• une tour d'absorption, en aval du refroidisseur/condenseur de gaz, pour absorber les NOₓ gazeux à partir du flux de NOₓ gazeux dans de l'eau, afin de produire un flux de NOₓ gazeux résiduel brut contenant de l'acide nitrique et un gaz résiduaire comprenant des NOₓ gazeux, comprenant une sortie de gaz résiduaire de tour d'absorption pour évacuer le gaz résiduaire ;
• une alimentation pour un second gaz contenant de l'oxygène, pour alimenter en oxygène un flux contenant du NOₓ gazeux entre le convertisseur d'ammoniac et la tour d'absorption, pour obtenir un gaz résiduaire contenant au moins 0,5 % en volume d'oxygène ; et
• un dispositif de chauffage de gaz résiduaire, positionné en amont du refroidisseur/condenseur de gaz, pour chauffer un flux de gaz résiduaire avec la chaleur issue du mélange NOₓ gazeux/vapeur d'eau provenant du convertisseur d'ammoniac ;
**caractérisée en ce que** le système comprend en outre :
• un moyen pour diviser un gaz résiduaire en un premier flux de gaz résiduaire et un second flux de gaz résiduaire, le premier flux de gaz résiduaire étant en communication fluidique avec le gaz riche en oxygène et le mélange du gaz riche en oxygène et du premier flux de gaz résiduaire fournissant le premier gaz contenant de l'oxygène ; et
• un moyen pour mettre sous pression un gaz, situé n'importe où dans la communication fluidique entre la tour d'absorption et l'appareil de mélange ou n'importe où entre le convertisseur d'ammoniac et la tour d'absorption, afin de fournir le premier flux de gaz résiduaire à une pression P1.

2. Installation de production pour produire de l'acide nitrique selon la revendication 1, comprenant éventuellement une source d'air sous pression pour mettre sous pression le système, en particulier pendant le démarrage, en communication fluidique avec un système comprenant :
• une source de gaz riche en oxygène, en particulier une source de gaz riche en oxygène sous pression, telle qu'un électrolyseur d'eau à haute pression ;
• un appareil de mélange en aval de la source du gaz riche en oxygène, pour mélanger un premier gaz contenant de l'oxygène ayant une pression P1 avec un flux d'ammoniac gazeux, afin de produire un mélange ammoniac/gaz contenant de l'oxygène ;
• un moyen pour mesurer la concentration de l'oxygène dans le premier gaz contenant de l'oxygène ;
• un moyen pour ajuster la concentration de l'oxygène dans le premier gaz contenant de l'oxygène de façon telle que le rapport molaire de l'oxygène à l'ammoniac à l'entrée du convertisseur d'ammoniac soit d'au moins 1,2 ;
• un moyen pour ajuster l'alimentation en flux d'ammoniac gazeux de l'appareil de mélange ;
• un convertisseur d'ammoniac pouvant fonctionner à une pression P1, la pression P1 étant inférieure ou égale à la pression de la source de gaz riche en oxygène, pour oxyder l'ammoniac présent dans le mélange ammoniac/gaz contenant de l'oxygène, afin de produire un mélange NOₓ gazeux/vapeur d'eau, comprenant de l'eau et de l'oxyde nitrique ;
• un moyen pour mesurer la température dans le convertisseur d'ammoniac ;
• un refroidisseur/condenseur de gaz en aval du convertisseur d'ammoniac, afin de produire un mélange aqueux d'acide nitrique dilué et un flux de NOₓ gazeux ;
• une tour d'absorption, en aval du refroidisseur/condenseur de gaz, pour absorber les NOₓ gazeux à partir du flux de NOₓ gazeux dans de l'eau, afin de produire un flux de NOₓ gazeux résiduel brut contenant de l'acide nitrique et un gaz résiduaire comprenant des NOₓ gazeux, comprenant une sortie de gaz résiduaire de tour d'absorption pour évacuer le gaz résiduaire ;
• un moyen pour mesurer la concentration de l'oxygène dans un flux de gaz résiduaire en aval de la tour d'absorption ;
• une alimentation pour un second gaz riche en oxygène, pour alimenter en oxygène entre le convertisseur d'ammoniac et la tour d'absorption, pour obtenir un gaz résiduaire contenant au moins 0,5 % en volume d'oxygène ; et
• un dispositif de chauffage de gaz résiduaire, positionné en amont du refroidisseur/condenseur de gaz, pour chauffer le gaz résiduaire provenant de la tour d'absorption à une température allant jusqu'à 650 °C avec la chaleur issue du mélange NOₓ gazeux/vapeur d'eau provenant du convertisseur d'ammoniac ;
**caractérisée en ce que** le système comprend en outre :
• un moyen pour mettre sous pression un gaz à une pression P1, situé n'importe où en aval de la tour d'absorption ou n'importe où entre le convertisseur d'ammoniac et la tour d'absorption ou en amont du convertisseur d'ammoniac dans le premier flux contenant de l'oxygène ou dans le mélange ammoniac/gaz contenant de l'oxygène ;
• un moyen pour diviser un flux de gaz résiduaire en aval de la tour d'absorption en un premier flux de gaz résiduaire, en communication fluidique avec le gaz riche en oxygène, et un second flux de gaz résiduaire ; et
• un moyen pour ajuster la quantité de gaz résiduaire qui est divisé en le premier flux de gaz résiduaire et le second flux de gaz résiduaire.

3. Installation de production selon la revendication 1 ou 2, dans laquelle le système comprend en outre un ou plusieurs de :
• un échangeur de chaleur, pour échanger de la chaleur entre le gaz résiduaire et le flux de gaz résiduaire sortant du dispositif de chauffage de gaz résiduaire, le moyen pour diviser étant positionné en aval de l'échangeur de chaleur et le moyen pour mettre sous pression étant situé en amont de l'échangeur de chaleur ;
• une unité de traitement d'élimination de NOₓ ; et
• une turbine à vapeur, la turbine à vapeur pouvant alimenter en énergie au moins partiellement le moyen pour mettre sous pression.

4. Installation de production selon l'une quelconque des revendications 1 à 3, comprenant en outre un dispositif de blanchiment comprenant une entrée pour un gaz de blanchiment riche en oxygène et une sortie pour des gaz de blanchiment ou des gaz effluents et dans laquelle les gaz de blanchiment ou les gaz effluents sont en communication fluidique avec un flux quelconque entre le convertisseur d'ammoniac et la tour d'absorption, de façon telle que le second gaz contenant de l'oxygène est au moins partiellement fourni par les gaz de blanchiment ou les gaz effluents.

5. Installation de production selon la revendication 4, dans laquelle une partie du gaz riche en oxygène ou une partie du premier gaz contenant de l'oxygène ou une partie du gaz résiduaire est en communication fluidique avec l'entrée du dispositif de blanchiment, de façon telle que le gaz de blanchiment riche en oxygène est au moins partiellement fourni par une partie du gaz riche en oxygène ou une partie du premier gaz contenant de l'oxygène ou une partie du flux de gaz résiduaire en aval du moyen pour mettre sous pression.

6. Installation de production selon l'une quelconque des revendications 1 à 5, dans laquelle le gaz riche en oxygène, le second gaz contenant de l'oxygène, le gaz de blanchiment riche en oxygène et les gaz effluents riches en oxygène sont tous au moins partiellement fournis par un électrolyseur d'eau à haute pression.

7. Installation de production selon l'une quelconque des revendications 1 à 6, comprenant en outre un détendeur de gaz résiduaire pour détendre le second flux de gaz résiduaire à pression atmosphérique, afin de produire un gaz résiduaire détendu, dans laquelle le moyen pour mettre sous pression peut être alimenté au moins partiellement en énergie par le détendeur de gaz résiduaire ou par la turbine à vapeur ou par une source d'énergie.

8. Installation de production selon l'une quelconque des revendications 2 à 7, dans laquelle la communication fluidique entre la source d'air sous pression et le système est en communication fluidique directe avec le gaz riche en oxygène.

9. Procédé pour produire de l'acide nitrique avec une consommation d'énergie réduite et des émissions réduites, dans une installation de production selon l'une quelconque des revendications 1 à 8, comprenant les étapes consistant à :
avant l'étape c), fournir ou préparer un gaz riche en oxygène et un premier gaz contenant de l'oxygène et fournir un flux d'ammoniac gazeux ;
c) alimenter l'appareil de mélange en flux d'ammoniac gazeux et premier gaz contenant de l'oxygène, ce qui permet de produire le mélange ammoniac/gaz contenant de l'oxygène ;
d) oxyder l'ammoniac présent dans le mélange ammoniac/gaz contenant de l'oxygène dans le convertisseur d'ammoniac à une pression P1, ce qui permet de produire un mélange gazeux NOₓ gazeux/vapeur d'eau comprenant de l'eau et de l'oxyde nitrique ;
e) séparer et condenser de la vapeur d'eau dans le refroidisseur/condenseur de gaz, ce qui permet de générer un mélange aqueux d'acide nitrique dilué et un flux de NOₓ gazeux ;
f) absorber le flux de NOₓ gazeux dans la tour d'absorption, ce qui permet de produire le flux de NOₓ gazeux résiduel brut contenant de l'acide nitrique et le gaz résiduaire comprenant des NOₓ gazeux ; et
g) chauffer le gaz résiduaire dans le dispositif de chauffage de gaz résiduaire avec le mélange gazeux NOₓ gazeux/vapeur d'eau ;
**caractérisé en ce que** le procédé comprend en outre les étapes consistant à :
h) mettre sous pression un flux gaz situé n'importe où en aval de la tour d'absorption ou n'importe où entre le convertisseur d'ammoniac et la tour d'absorption ou en amont du convertisseur d'ammoniac dans le premier flux contenant de l'oxygène ou dans le mélange ammoniac/gaz contenant de l'oxygène, à une pression P1 avec le moyen pour mettre sous pression ;
i) diviser le gaz résiduaire avec le moyen pour diviser en un premier flux de gaz résiduaire et un second flux de gaz résiduaire ; et mélanger le premier flux de gaz résiduaire avec le gaz riche en oxygène, ce qui permet d'obtenir le premier gaz contenant de l'oxygène ;
k) ajuster le débit du gaz riche en oxygène qui est mélangé à l'étape i) ou le débit du flux d'ammoniac gazeux à l'étape c, de façon à maintenir le rapport molaire de l'oxygène à l'ammoniac à l'intérieur du convertisseur d'ammoniac à un rapport d'au moins 1,2, en particulier compris entre 1,2 et 9 ;
o) ajuster le débit d'un second gaz contenant de l'oxygène, pour obtenir un flux de gaz résiduaire contenant au moins 0,5 % en volume d'oxygène.

10. Procédé pour produire de l'acide nitrique avec une consommation d'énergie réduite et des émissions réduites selon la revendication 9, comprenant les étapes consistant à :
a) de préférence, mettre sous pression le système par l'alimentation du système en air sous pression ayant une pression P1 ;
b) de préférence, induire un débit d'air sous pression dans le système par le fonctionnement du moyen pour mettre sous pression à l'aide d'énergie externe ;
c) alimenter l'appareil de mélange en flux d'ammoniac gazeux et un premier gaz contenant de l'oxygène, ce qui permet de produire le mélange ammoniac/gaz contenant de l'oxygène ;
d) oxyder l'ammoniac présent dans le mélange ammoniac/gaz contenant de l'oxygène dans le convertisseur d'ammoniac, en particulier à une pression inférieure ou égale à P1 et à une température allant de 800 à 950 °C, ce qui permet de produire le mélange gazeux NOₓ gazeux/vapeur d'eau, comprenant de l'eau et de l'oxyde nitrique ;
e) séparer et condenser de la vapeur d'eau dans le refroidisseur/condenseur de gaz, ce qui permet de générer le mélange aqueux d'acide nitrique dilué et le flux de NOₓ gazeux ;
f) absorber le flux de NO_{X} gazeux dans la tour d'absorption, ce qui permet de produire le flux de NO_{X} gazeux résiduel brut contenant de l'acide nitrique et le gaz résiduaire comprenant des NO_{X} gazeux ; et
g) chauffer le gaz résiduaire dans le dispositif de chauffage de gaz résiduaire à une température allant jusqu'à 650 °C avec le mélange gazeux NOₓ gazeux/vapeur d'eau ;
le procédé comprenant en outre les étapes consistant à :
h) mettre sous pression un flux de gaz situé n'importe où en aval de la tour d'absorption ou n'importe où entre le convertisseur d'ammoniac et la tour d'absorption ou en amont du convertisseur d'ammoniac dans le flux contenant de l'oxygène ou dans le mélange ammoniac/gaz contenant de l'oxygène, avec le moyen pour mettre sous pression ;
i) diviser un flux de gaz résiduaire avec un moyen pour diviser en un premier flux de gaz résiduaire et un second flux de gaz résiduaire et mélanger le premier flux de gaz résiduaire avec le gaz riche en oxygène, ce qui permet de fournir le gaz contenant de l'oxygène ;
j) mesurer la concentration de l'oxygène dans le gaz contenant de l'oxygène ;
k) si la concentration de l'oxygène mesurée à l'étape j) est telle que le rapport molaire de l'oxygène à l'ammoniac à l'entrée du convertisseur d'ammoniac est inférieur à 1,2, en particulier compris entre 1,2 et 9, ajuster l'alimentation en gaz riche en oxygène et qui est mélangé à l'étape i) ou l'alimentation en flux d'ammoniac gazeux à l'étape c), de façon telle que le rapport molaire de l'oxygène à l'ammoniac à l'entrée du convertisseur d'ammoniac soit d'au moins 1,2, en particulier compris entre 1,2 et 9 ;
l) mesurer la température dans le convertisseur d'ammoniac ;
m) ajuster le volume du premier flux de gaz résiduaire qui est mélangé à l'étape i) ou de l'alimentation en flux d'ammoniac gazeux alimenté à l'étape c'), si la température mesurée à l'étape l) est en dehors de la plage de 800 à 950 °C, de façon telle que la température dans le convertisseur d'ammoniac soit maintenue dans la plage de 800 à 950 °C ;
n) mesurer la concentration de l'oxygène dans un flux de gaz résiduaire en aval de la tour d'absorption ;
o) si la concentration de l'oxygène mesurée à l'étape n) est inférieure à 0,5 % en volume d'oxygène, ajuster l'alimentation en gaz riche en oxygène entre le convertisseur d'ammoniac et la tour d'absorption, de façon telle que le gaz résiduaire contienne au moins 0,5 % en volume d'oxygène ;
p) alimenter l'unité de mélange en gaz contenant de l'oxygène ; et
q) répéter les étapes c) à p).

11. Procédé selon la revendication 9 ou 10, dans lequel, à l'étape h), au moins une partie du gaz résiduaire obtenu à partir de l'étape f) est mise sous pression dans le moyen pour mettre sous pression, ce qui permet de générer un gaz résiduaire sous pression, et le procédé comprenant en outre les étapes consistant à :
(h1) chauffer le gaz résiduaire sous pression avec un flux de gaz résiduaire en aval du dispositif de chauffage de gaz résiduaire et à diviser à l'étape i), dans l'échangeur de chaleur, ce qui permet d'amener le gaz résiduaire à mélanger à l'étape i) à une température au-dessous de 300 °C ;
r) traiter le gaz résiduaire dans l'unité de traitement d'élimination de NOₓ avant l'étape g) et après l'étape h1) ; et
s) récupérer au moins une partie de la vapeur d'eau générée dans le convertisseur d'ammoniac dans la turbine à vapeur.

12. Procédé selon l'une quelconque des revendications 9 à 11, comprenant en outre l'étape consistant à :
t) blanchir le flux de NOₓ gazeux résiduel brut contenant de l'acide nitrique dans un dispositif de blanchiment, ce qui permet de produire l'acide nitrique blanchi.

13. Procédé selon la revendication 12, en particulier dans un système selon la revendication 4, comprenant en outre l'étape consistant à :
u) amener une partie du gaz riche en oxygène ou une partie du premier gaz contenant de l'oxygène obtenu à l'étape i) ou une partie du gaz résiduaire obtenu à l'étape g) à alimenter l'entrée du dispositif de blanchiment à l'étape t).

14. Procédé selon l'une quelconque des revendications 9 à 13, comprenant en outre les étapes consistant à :
v) faire fonctionner un électrolyseur d'eau, ce qui permet de produire de l'oxygène, en particulier de l'oxygène sous pression ; et
w) fournir, à partir de l'oxygène produit par l'électrolyseur d'eau à l'étape v), au moins une partie du gaz riche en oxygène, du second gaz contenant de l'oxygène, du gaz de blanchiment riche en oxygène et des gaz effluents avec de l'oxygène.

15. Procédé selon l'une quelconque des revendications 9 à 14, comprenant en outre l'étape consistant à :
x) détendre à pression atmosphérique le second flux de gaz résiduaire dans le détendeur de gaz résiduaire, ce qui permet de produire le gaz résiduaire détendu.

16. Procédé selon l'une quelconque des revendications 10 à 15, dans lequel, à l'étape a), l'air sous pression est amené à alimenter le flux en communication fluidique directe avec le gaz riche en oxygène.

17. Utilisation de l'installation de production selon l'une quelconque des revendications 1 à 8 pour réaliser le procédé selon l'une quelconque des revendications 9 à 16.

18. Procédé pour rénover une installation de production pour produire de l'acide nitrique, dans lequel l'installation de production comprend :
• un compresseur d'air pour fournir de l'air comprimé ;
• un appareil de mélange pour mélanger de l'air comprimé avec un flux d'ammoniac gazeux, afin de produire un mélange ammoniac/gaz contenant de l'oxygène ;
• un convertisseur d'ammoniac, pour oxyder l'ammoniac présent dans le mélange ammoniac/gaz contenant de l'oxygène, afin de produire un mélange NOₓ gazeux/vapeur d'eau comprenant de l'eau et de l'oxyde nitrique ;
• un refroidisseur/condenseur de gaz en aval du convertisseur d'ammoniac, afin de produire un mélange aqueux d'acide nitrique dilué et un flux de NOₓ gazeux ;
• une tour d'absorption, en aval du refroidisseur/condenseur de gaz, pour absorber les NOₓ gazeux à partir du flux de NOₓ gazeux dans de l'eau, afin de produire un flux de NOₓ gazeux résiduel brut contenant de l'acide nitrique et un gaz résiduaire comprenant des NOₓ gazeux, comprenant une sortie de gaz résiduaire de tour d'absorption pour évacuer le gaz résiduaire ; et
• un dispositif de chauffage de gaz résiduaire, positionné en amont du refroidisseur/condenseur de gaz, pour chauffer un flux de gaz résiduaire avec la chaleur issue du mélange NOₓ gazeux/vapeur d'eau provenant du convertisseur d'ammoniac ;
en une installation de production selon l'une quelconque des revendications 1 à 8, comprenant les étapes consistant à :
• introduire une source d'air sous pression en communication fluidique avec l'installation de production ;
• introduire une alimentation ou une source pour un gaz riche en oxygène, telles qu'un électrolyseur d'eau à haute pression, le mélange du gaz riche en oxygène et d'air comprimé fournissant une partie du premier gaz contenant de l'oxygène ;
• introduire une alimentation pour un second gaz contenant de l'oxygène, pour alimenter en oxygène entre le convertisseur d'ammoniac et la tour d'absorption, de façon telle qu'un flux de gaz résiduaire contient au moins 0,5 % en volume d'oxygène ;
• introduire un moyen pour réguler la concentration de l'oxygène dans le convertisseur d'ammoniac et/ou du flux d'ammoniac gazeux, en particulier un moyen pour régler le débit du gaz riche en oxygène et/ou un moyen pour régler le débit du flux d'ammoniac gazeux, pour maintenir le rapport molaire de l'oxygène à l'ammoniac à l'intérieur du convertisseur d'ammoniac à un rapport d'au moins 1,2, en particulier compris entre 1,2 et 9 ;
• introduire un moyen pour diviser un flux de gaz résiduaire en un premier flux de gaz résiduaire et un second flux de gaz résiduaire, le premier flux de gaz résiduaire étant en communication fluidique avec le gaz riche en oxygène, ce qui permet de fournir le premier gaz contenant de l'oxygène ;
• introduire un moyen pour mettre sous pression un gaz à une pression P1 situé n'importe où dans la communication fluidique entre la tour d'absorption et l'appareil de mélange ou entre le convertisseur d'ammoniac et la tour d'absorption, de façon à fournir le premier flux de gaz résiduaire à une pression P1 ; et
• retirer le compresseur d'air.
